(19) Europäisches Patentamt
European Patent Office
Office européen des brevets

(11) **EP 4 733 712 A1**

(12) **EUROPEAN PATENT APPLICATION**

(43) Date of publication:
**29.04.2026  Bulletin 2026/18**

(21) Application number: **24208752.6**

(22) Date of filing: **24.10.2024**

(51) International Patent Classification (IPC):
**G01B 9/02015** (2022.01)    **B23K 26/03** (2006.01)
**B23K 26/04** (2014.01)    **G01B 11/02** (2006.01)

(52) Cooperative Patent Classification (CPC):
**G01B 11/026; B23K 26/032; B23K 26/048;**
**G01B 9/02015;** G01B 9/02064; G01B 11/2441;
G01B 2290/35

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Raylase GmbH**
**82234 Wessling (DE)**

(72) Inventor: **Ghadimi, Reza**
**82229 Seefeld (DE)**

(74) Representative: **Araujo Edo, Mario**
**Boehmert & Boehmert**
**Anwaltspartnerschaft mbB**
**Pettenkoferstraße 22**
**80336 München (DE)**

(54) **COORDINATED ADJUSTMENT OF OBJECT ARM AND REFERENCE ARM**

(57) The invention refers to a measurement module (10) for a laser processing apparatus (1) comprising a connection port (12) for coupling to a distance detection device (42) and a coupling port (14) for coupling to a laser processing module (30); a first optical path (P1) and a second optical path (P2) for laser light received and outputted through the connection port (12), wherein the first optical path (P1) is defined from the connection port (12) to a reference optical reflector (16) and the second optical path (P2) is defined between the connection port (12) and the coupling port (14); further comprising a first optical path length regulator system (20) for adjusting a first optical path length of the first optical path (P1) and a second optical path length regulator system (21) for adjusting a second optical path length of the second optical path (P2); wherein the first optical path length regulator system (20) is coupled with the second optical path length regulator system (21), such that a first optical path length variation ($\Delta 1$) of the first optical path length is coupled with a second optical path length variation ($\Delta 2$) of the second optical path length. The invention further refers to a related interferometer system comprising a distance detection device (42) and such a measurement module (10) and to a laser processing apparatus (1) comprising a laser processing module (30) for laser-processing a workpiece (P) and such a measurement module (10).

FIG. 1

**Description**

FIELD OF THE INVENTION

The present invention is in the field of applied optics and laser processing. In particular, the invention regards a measuring module and an interferometer system usable with a laser processing module as an adjustable optical subsystem for directing a measurement beam to a detection device configured to measure distances, in particular distances between the laser processing module or the deflection unit thereof and the surface of a workpiece being laser-processed, within a broad range of measurable distances. The invention also regards a laser processing module comprising such a measuring module.

BACKGOUND OF THE INVENTION

The use of lasers is nowadays ubiquitous in the material-processing industry. Relevant examples are additive manufacturing (AM), 3d-printing, welding, cutting, marking, or engraving of different materials such as metals or polymers.
In laser-processing techniques, a work laser beam is scanned over a surface of material to be laser-processed using a deflection system, for example an XY pair of rotatable mirrors operated by corresponding galvanometer motors. The rotatable mirrors can be used for directing the work laser beam to a desired target position of the surface to be laser-processed so as to laser-process the material in a controlled manner.
In such techniques, it is generally desired to keep the focus of the work laser beam on the surface to be laser-processed in order to ensure a high material quality of the final product. Uncontrolled variations in the focus position may be related, for example, to uncontrolled variations in the amount of laser energy transmitted to the material in a given target position, which may lead to undesired irregularities in the final product, for example when welding, 3d-printing or cutting a piece of material.
Optical measurement modules are used to keep track of such irregularities by measuring the corresponding variations in optical distances. To correspondingly react by controlling an adjustable focusing system so as to compensate such variations, it may be important to implement a continuous distance detection. Thus, some optical path length regulators include detection systems configured for measuring distances in real-time.
One known possibility for implementing an optical distance measurement system is based on the use of optical coherent tomography (OCT). An optical coherent tomograph is typically configured for performing distance measurements based on an interference between laser light propagating through forming a measurement beam propagating along an object arm or measurement arm of the OCT and reflected at the work surface and a reference beam obtained from the same laser light that propagates along a reference arm path with a known optical path length.
In an OCT, there may be two adjustable distances or positions, one corresponding to an optical path length of the reference arm, and the other corresponding to an optical path length of the object or measurement arm. OCT systems in which both an optical path length of the reference arm and an optical path length of the object or measurement arm are adjustable are known in the art.
US 2016/0059347 A1 describes an OCT in which the optical path length of the reference arm is adjustable by shifting a plane mirror, for example in reaction to a variation in focal position, and the optical path length of the object arm is adjustable by shifting a movable lens of a focusing optics and by operating a path length modulator.
DE 2019 001 858 B3 discloses an OCT comprising an optical path length regulator configured for adjusting a length of a optical fiber in the reference arm and a length of another optical fiber in the object or measurement arm such that the optical path length of the reference arm increases and the optical path length of the object or measurement arm decreases or vice versa.
US 2017/0276471 A1 describes an OCT system comprising a plurality of optical fibers configured for implementing different optical delays for a corresponding plurality of interferometers. An adjustment of the optical path length of the reference arm and an adjustment of the optical path length of the object arm are not described as being mutually coupled.
In EP 4 296 612 A1 the present inventors described a measurement for a laser processing apparatus with a first optical path with fixed optical path length corresponding to a reference arm and with a second optical path with a variable optical path length corresponding to an object or measurement arm.
Thus, there is room for technical improvement in the field of distance measurement in laser-processing systems.

SUMMARY OF THE INVENTION

The present invention aims at providing a measurement module allowing a detection system of a laser processing apparatus to implement an accurate and reliable continuous distance determination. This problem is solved by a measurement module according to claim 1, by an interferometer system according to claim 13, and by a laser processing apparatus according to claim 14, which comprises such a measurement module. Preferred embodiments of the invention are defined in the appended dependent claims.

A first aspect of the invention refers to a measurement module for a laser processing apparatus. The laser processing apparatus may comprise a laser processing module for laser-processing a workpiece on a work field, for example an AM-module, and the measurement module. The measurement module may be optically and mechanically couplable with the laser processing module, although both modules may be structurally independent. The laser processing module may correspond to a part of the laser processing apparatus in which laser light is generated/inputted and optically configured for laser-processing the workpiece on the work field, while the measurement module may correspond to a part of the laser processing apparatus in which laser light is generated/inputted and outputted and optically configured for performing laser-based distance measurements, which may be used by the laser processing apparatus, for example for correctly focusing a work beam on the work field and/or on the workpiece. This modular configuration may allow integrating the measurement module according to the invention in different laser processing modules and vice versa.

The measurement module comprises a connection port, possibly a single connection port, configured for optically coupling the measurement module to a distance detection device. In particular, the connection port may be configured for receiving and outputting laser light from and to the distance detection device, which may include or be optically couplable to an interference sensor, such that the measurement module and the distance detection device may implement an interferometer, in particular for performing interferometric distance detection.

As used herein, the term "downstream" will indicate optical elements or positions along an optical path closer to the connection port. Thus, if A is downstream from B, this shall indicate that A is closer to the connection port, following the corresponding optical path, than B. Consistently with this, "upstream" will indicate herein optical elements or positions along an optical path closer to the coupling port. Thus, if C is upstream from D, this shall indicate that C is closer to the coupling port, following the corresponding optical path, then D.

The laser light inputted from and/or outputted to the distance detection device may be laser light suitable for performing an interferometric measurement, in particular coherent laser light, preferably broadband low coherence light. The laser light inputted from and/or outputted to the distance detection device may be separable or separated in two parallel optical paths or arms for performing an interferometric measurement. The separation of the laser light into two separate optical paths may be performed outside the measurement module or inside the measurement module.

For example, if the separation of the laser light into two separate optical paths is performed outside the measurement module, the connection port may be configured for inputting and outputting the laser light via two corresponding optical paths, for example in the form of two separate light beams. If the separation of the laser light into two separate optical paths is performed in the measurement module, the connection port may be configured for inputting the laser light via one single optical path, for example in the form of a single light beam, and the measurement module may comprise an optical splitter for splitting the laser light into separate optical paths (interferometer arms). In the latter case, the connection port may be configured for outputting the laser light via two corresponding optical paths, for example in the form of two separate light beams.

The measurement module further comprises a coupling port for optically coupling the measurement module to a laser processing module of the laser processing apparatus. When the measurement module is optically coupled to the laser processing module via the coupling port, laser light may be transmitted from the measurement module into the laser processing module and vice versa through the coupling port, and through a corresponding further coupling port of the laser processing module. The measurement module may be mechanically attachable to the laser processing module for optically coupling the measurement module to the laser processing module.

In the measurement module of the invention, a first optical path and a second optical path are be defined for the laser light received and outputted through the connection port, possibly at least in part within a housing of the measurement module. The first optical path and the second optical path may be completely contained within such housing. The first optical path and the second optical path may be independent and separate from each other and may in particular have no overlap or may have a partial overlap at portions thereof between the connection port and an optical splitter at which laser light received through the connection port may be split into the first optical path and the second optical path.

The first optical path is defined between the connection port and a reference optical reflector of the measurement module, i.e. for light travelling from the connection port to the reference optical reflector and back to the connection port. The reference optical reflector reflects the laser light back to the connection port. The reference optical reflector may comprise any reflective optical component, in particular a mirror or a retroreflector. The laser light received through the connection port may be directed through the first optical path to the reference optical reflector and reflected by the reference optical reflector back to the connection port through the first optical path. The reference optical reflector may be arranged at a controllable or predefined optical distance from the connection port to act as a reference for an interferometric measurement, wherein the laser light received and outputted through the connection port and reflected by the reference optical reflector covers the predefined optical distance from the connection port to the reference optical reflector and back in a corresponding predefined time, possibly through one or more optional correspondingly configured optical fibers. The previously mentioned predefined optical distance may then be determined by the one or more optional optical fibers through which laser light may propagate between the connection port and the reference optical reflector, for example by a length and/or a refraction index of the one or more optical fibers. The measurement module may comprise one or more collimation elements for collimating laser light emerging from an end of each of such optical fibers for further transmission in the measurement module.

Thus, the first optical path may correspond to the so-called reference arm of an interferometer optical arrangement, in particular of an interferometer arrangement that may be formed by the measurement module and the previously mentioned distance detection device that may be optically coupled thereto.

The second optical path is defined between the connection port and the coupling port, i.e., for light travelling from the connection port to the coupling port and back to the connection port. The laser light received through the connection port may be directed through the second optical path to the coupling port, from which it may be fed into a laser processing module to which the measuring module may be optically and possibly mechanically coupled. The laser light received in the laser processing module from the measurement module via the coupling port may be directed by the laser processing module to the work field and/or to a workpiece being laser-processed, where it may be reflected back. The laser processing module may then direct the reflected light back to the measurement module through the coupling port. The reflected light is then guided along the second optical path back to the connection port for being transmitted to a distance detection device that may be optically coupled to the connection port. The distance detection device may then perform an interferometric measurement to determine a distance based on the laser light received from the first optical path and from the second optical path.

The second optical path may correspond to the so-called object arm of an interferometer optical arrangement, in particular of the interferometer arrangement that may be formed by the measurement module and the previously mentioned distance detection device that may be optically coupled thereto.

The measurement module may be thought of as an intermediate optical path length regulator system optically arranged between a distance detection device and a laser processing module, wherein the distance detection device may be optically coupled with the laser processing system via the measurement module. Laser light received from the distance detection device and/or from a corresponding laser light source may enter the measurement module and be transmitted through the second optical path and the coupling port to the laser processing module, where it can be directed to the work field thereof and/or a workpiece being laser-processed. The laser light reflected by the work field and/or by the workpiece can then be directed by the laser processing module and the measurement module back to the distance detection device through the coupling port and the second optical path, for being used by the distance detection device for performing a distance measurement based on an interference thereof with the laser light reflected by the reference optical reflector.

The measurement module of the invention further comprises a first optical path length regulator system configured for adjusting a first optical path length of the first optical path and a second optical path length regulator system configured for adjusting a second optical path length of the second optical path.

An optical path length difference between the first optical path length and the second optical path length may be used for performing interferometric measurements, in particular by the previously mentioned detection device. Monitoring variations in such optical path length difference may allow determining distances based on an interferometric measurement using an interference between laser light received from the first optical path and laser light received from the second optical path, which may have been originally generated coherently with the laser light received from the first optical path. The way in which such interferometric distance determination can be performed is well known to the skilled person and is hence not explained in detail here.

An "optical path length" may be understood herein as referring to the product of unit of length times local refraction index integrated over a given optical path. In mathematical terms, the optical path length OPL may be expressed for a medium with constant refractive index n for a path with geometrical length s as:

$$OPL = n \cdot s. \tag{1}$$

For a medium with a refractive index variable over the length of the path, the OPL may be mathematically expressed as the path integral:

$$OPL = \int n(s) \cdot ds. \tag{2}$$

The first and second optical path length regulator systems are respectively configured for controllably setting the first and second optical path length, in particular by controllably modifying the first optical path length of the first optical path, which may correspond to the so-called "reference arm" and/or by controllably modifying the second optical path length of the second optical path, which may correspond to the so-called "object arm". This may imply controllably setting and/or modifying a geometric path length (cf. s and ds in the above equations) of the corresponding optical path and/or a refractive index of at least a portion of the corresponding optical path (cf. n and n(s) in the above equations). For this purpose, the first optical path length regulator system may be integrated in the first optical path, which may act as the reference arm of an interferometer arrangement formed by the measurement module and by the previously mentioned distance detection device that may be optically coupled to the connection port, and the second optical path length regulator system may be integrated in the second optical path, which may act as the object arm of such interferometer arrangement. In other words, the first optical path may partly extend along/within the first optical path length regulator system and the second optical path may partly extend along/within the second optical path length regulator system. For example, the first and/or second optical path length regulator system may comprise a plurality of reflective and/or refractive optical elements, such as mirrors, lenses and/or prisms, at which the laser light transmitted through the first and/or second optical path may respectively be reflected and/or refracted.

According to the invention, the first optical path length regulator system and the second optical path length regulator system are coupled to each other, such that a first optical path length variation of the first optical path length, which may be implemented by the first optical path length regulator system, and a second optical path length variation of the second optical path length, which may be implemented by the second optical path length regulator system, are mutually coupled, i.e. are not independent from each other.

Such coupling means that the first and second optical path length regulator systems may be functionally coupled and/or functionally dependent such that the first and second optical path length variations are mutually dependent. Thus, the first and second optical path length variations are not mutually independent and may be correlated, in particular deterministically correlated, such that each possible value of the first optical path length variation may be associated with a corresponding value of the second optical path length variation, meaning that when the first optical path is varied by a given value of the first optical path length variation, the second optical path is deterministically varied by an associated value of the second optical path length variation. There may be a one-to-one mapping between values of the first optical path length variation and values of the second optical path length variation.

The possibility of adapting the first optical path length and the second optical path length allows implementing a more rapid reaction to controlled or uncontrolled variations in the measurement conditions of a detection device or interferometer coupled to the measurement module of the invention while achieving improved accuracy.

As compared to a system in which only the second optical path length (object arm) is adapted for compensation, as is the case in EP 4 296 612 A1, an overall smaller shifting or moving of movable optical components may be needed for optically compensating controlled or uncontrolled variations in the measurement conditions of a detection device or interferometer coupled to the measurement module of the invention. For example, for a given variation of measurement conditions, a variation of the second optical path length (object arm) 2X may be necessary if only the second optical path length is adapted for leaving interferometric measurements unaffected after optically compensating the variation of measurement conditions (e.g. deflection angle variation or working distance variation). If, for the same given variation of measurement conditions, both the first optical path length (reference arm) and the second optical path length (object arm) adapted, a single shorter shifting of one or more optical elements, for example by a distance X, may be sufficient for achieving a similar or even the same degree of optical compensation for the interferometric measurement. For example, by moving a single optical element by a distance X, the first optical path length may be decreased by X while the second optical path length is increased by X, such that interferometric measurements remain unaffected by the variation in measurement conditions. As a consequence, more rapid and/or more accurate compensations can be implemented.

The coupling between the first and second optical path length regulator system may be implemented mechanically and/or electronically. In some embodiments, each of the first optical path length regulator system and the second optical path length regulator system may comprise a respective mechanical and/or electronic system for adjusting the corresponding optical path length. In other embodiments, the first optical path length regulator system and the second optical path length regulator system may correspond to different parts and/or functions of a common mechanical and/or electronic system for adjusting the first and second optical path lengths. In other words, the first and second optical path length regulator systems may be through of as different parts of a common optical path length regulator system configured for adjusting the first optical path length and the second optical path length.

According to preferred embodiments, the first optical path length regulator system may comprise or be controlled by a first electromechanical control unit and the second optical path length regulator system may comprise or be controlled by a second electromechanical control unit, wherein the first electromechanical control unit and the second electromechanical control unit may be coordinated, such that the first optical path length variation of the first optical path length is coupled with the second optical path length variation of the second optical path length. This type of coupling, based on a coordination of control units, possibly at software-level, may be referred to herein as "electronic coupling". Preferably, each of the first optical path length regulator system and the second optical path length regulator system may comprise or be driven by a corresponding motor device, which may be configured for moving any movable optical components of the respective optical path length regulator system and may be controlled by the first electromechanical control unit or by the second electromechanical control unit, respectively.

Thus, a motor device associated to the first optical path length regulator system may be different and independent from a motor device associated of the second optical path length regulator system. The previously mentioned coordination between the first and second electromechanical control units may be software-implemented. For example, the first and second electromechanical control units may comprise different modules of a computer program running on a computer and imposing upon the first and second optical path length regulator systems a coordination sufficient for implementing the coupling between the first and second optical path lengths variations according to the invention.

In other embodiments, the first optical path length regulator system and the second optical path length regulator system may be mechanically coupled to each other, such that the first optical path length variation is mechanically coupled with the second optical path length variation. Preferably, the first optical path length regulator system and the second optical path length regulator system may comprise or be driven by a common motor device, which may be configured for moving any movable optical components of both the first and the second optical path length regulator systems. Thus, one same motor device may be associated to the first optical path length regulator system and to the second optical path length regulator system. The previously mentioned mechanical coupling between the first and second optical path length variations hence corresponds to a mechanical implementation of the coupling between the first and second optical path lengths variations according to the invention and may be referred to herein as "mechanical coupling".

In preferred embodiments, the previously mentioned mechanical coupling between the first optical path length regulator system and the second optical path length regulator system may comprise a mechanical rigid connection, for example a rigid bar, preferably a one-piece mechanical rigid connection. Such mechanical rigid connection may mechanically coupled one or more optical elements, for example reflection elements, of the first optical path length regulator system, with one or more optical elements, for example reflection elements, of the second optical path length regulator system.

Irrespectively of whether the mechanical coupling between the first optical path length regulator system and the second optical path length regulator system comprises or not a mechanical rigid connection, which may optionally be a one-piece connection, the mechanical coupling may provide a mechanical connection between one or more movable optical elements of the first optical path length regulator system and one or more movable optical elements of the second optical path length regulator system, wherein the movable optical elements may for example comprise one or more movable mirrors, one or more movable reflectors, one or more prisms or any combination thereof.

In preferred embodiments, the first optical path length regulator system may be coupled with the second optical path length regulator system, such that the first optical path length variation and the second optical path length variation are equal in absolute value and opposite in sign. In other words, the coupling between the first and second optical path length regulator systems may be such that the first and second optical path length variations cancel each other. This may allow eliminating any distortions due to jitter in measurements performed with the previously mentioned detection device, when coupled with the measurement module of the invention. Further, mutually cancelling the first and second optical path length variations may allow staying within a measurement range (also called "OCT measurement depth") of the previously mentioned detection device, within which distances may be determined by the distance detection device with a predetermined precision. As compared to a solution in which only the second optical path is varied, it may be possible to stay within a measurement range of the detection device in a greater region of space. In other words, it is possible to shift the region of space in which the detection device can perform accurate measurements within a greater depth range in space. "Equal in absolute value" may refer herein to differences in absolute value smaller than 10 $\mu$m, preferably smaller than 1 $\mu$m or even 100 nm.

In other embodiments, the first optical path length regulator system may be coupled with the second optical path length regulator system, such that an absolute value of the first optical path length variation and an absolute value of the second optical path length variation differ by a factor, wherein the factor may preferably be at least 2, 3, 4, 5, 10, 15 or 20. Such configurations offer the advantage of implementing such predefined factorized differences between the first and second optical path lengths, for example in contexts in which optical measurement accuracy is more important than measurement time or rapidity. In some embodiments, it may be foreseen that the first optical path length variation be a multiple of the second optical path length variation, while in other embodiments the second optical path length variation may be a multiple of the first optical path length variation.

In preferred embodiments of the invention, a first refraction index of a section of the first optical path within the first optical path length regulator system and/or a second refraction index of a section of the second optical path within the second optical path length regulator system is equal to a refraction index of air. The first and second refraction indices may respectively correspond to the result of integrating equation (2) above for the optical path length, OPL, over said section of the first optical path extending within the first optical path length regulator system and over said section of the second optical path extending within the second optical path length regulator system, respectively. A section of the first optical path within the first optical path length regulator system may correspond to a section of the first optical path comprised between two extremal reflective optical components of the first optical path length regulator system, at which light is reflected first or last in either direction when being transmitted through the first optical path length regulator system. The same applies to the second optical path length regulator system. Preferably, light may be transmitted within any of said sections of the first and second optical paths only through air, without being transmitted through any optical elements, such as prisms or optical fibers, which may have a refraction index different, in particular greater, than the refraction index of air. In other words, the first optical path length regulator system and/or the second optical path length regulator system may comprise reflective elements only and/or may be free of any refractive elements.

In preferred embodiments of the invention, the first optical path length regulator system may comprise or be connected to at least one linear motor configured for adjusting the first optical path length. Additionally or alternatively, the second optical path length regulator system may comprise or be connected to at least one linear motor configured for adjusting the second optical path length. The at least one linear motor may be free of any motion-generating rotating elements. The use of linear motors may allow achieving better precision for adjusting positions of optical elements of the first and/or second optical path length regulator system.

Preferably, the at least one linear motor of the first and/or second optical path length regulator system may comprise a static permanent magnet and a movable coil electromagnetically coupled with the permanent magnet such that the linear drive generated by the at least one linear drive is generated upon the movable coil when an electric current is provided to the movable coil, in particular a linear drive in a direction parallel to a coiling axis of the coil, around which windings of the coil may be wound. The coil may be arranged surrounding the permanent magnet. Alternatively, the permanent magnet, which may optionally be a ring-shaped magnet, may be arranged surrounding the coil. Such configurations may reduce a moving mass as compared to configurations of a linear drive with a moving permanent magnet and a static coil.

In preferred embodiments, the first optical path length regulator system may be configured for implementing the first optical path length variation in a range from 2 $\mu$m to 550 mm, preferably from 500 nm to 450 mm. Additionally or alternatively, the second optical path length regulator system may be configured for implementing the second optical path length variation in a range from 2 $\mu$m to 550 mm, preferably from 500 nm to 450 mm. Such variation ranges may refer, in each case, to a maximal difference between the smallest possible value and the greatest possible value of the respective optical path length implementable with the corresponding optical path length regulator system.

According to preferred embodiments, the measurement module of the invention may further comprise a focusing system arranged at least in part in the second optical path between the connection port and the second optical path length regulator system, which may be configured for collimating and/or focusing the laser light transmitted through the second optical path. The focusing system may optionally have a fixed focal length. The focusing system may be partially or totally arranged in the previously defined position in the second optical path between the connection port and the second optical path length regulator system. For example, the focusing system may comprise a collimation lens and a focusing lens both arranged between the connection port and the second optical path length regulator system, in which case the focusing system may be totally arranged between the connection port and the second optical path length regulator system. In other examples, the focusing system may comprise a collimation lens arranged between the connection port and the second optical path length regulator system and a focusing lens, which may be a so-called f-theta lens, arranged downstream from the second optical path length regulator system possibly outside of the measurement module, e.g. in a laser processing module to which the measurement module may be coupled. The focusing lens may in such cases be integrated in a window of the laser processing module, through which laser beams, in particular a measurement beam generated by the measurement module and a work beam, may be transmitted.

The focusing system may be configured for focusing the laser light transmitted through the second optical path, corresponding for example to a measurement beam used for performing a distance measurement. The focusing system may preferably comprise one or more static lenses and no movable lenses. However, in other embodiments, the focusing system may have a variable focal length. For example, the focusing system may comprise one or more static lenses and one or more movable lenses, corresponding galvanometer motors for setting the position of each of the movable lenses, and a corresponding control unit for adjusting the focal length of the focusing system. The focusing system may then be or comprise a focusing system as described in WO 2018/078137 A1 of the applicant. The focusing system of the measurement module may be used for focusing a measurement beam transmitted through the second optical path on the work field and/or on the workpiece being laser-processed by a laser processing module of the laser processing apparatus, when the measurement module is optically coupled, and possibly mechanically attached, thereto. As previously mentioned, this may ensure an optimal signal-to-noise ratio of the measurement beam and hence an optimal measurement accuracy, even for big values of a deflection angle used for deflecting the measurement beam. Further, the focusing system may allow keeping a spot size of the measurement beam constant for all values of the deflection angle, even on a planar work field.

Preferably, a section of the second optical path between the second optical path length regulator system and the coupling port may be free of any dynamic scanning unit. A "dynamic scanning unit" may refer herein to an optical device configured for dynamicly scanning or deflecting a laser beam, in particular using a pair of XY movable mirrors. An optical deflection unit used for directing a laser beam transmitted through the second optical path, for example a measurement beam, may be arranged outside of the measurement module, for example in a laser processing module to which the measurement module may be attached via the coupling port. In general, the measurement module according to the invention may be free of any dynamic scanning unit. A measurement beam transmitted through the measurement module may then be deflected or scanned by an external dynamic scanning unit, for example a pair of XY movable mirrors of a laser processing module to which the measurement module may be attached via the coupling port.

According to preferred embodiments, the coupling port may be configured for collimating a laser beam transmitted therethrough to the interior of the measurement module. Thus, the coupling port, which may comprise one or more collimating lenses, may be configured for implementing a collimating function, in particular for a reflected measurement beam reentering the measurement module through the coupling port. This allows having an improved signal-to-noise ratio both for optical measurements performed using the reflected measurement beam, in particular for interferometric measurements and/or for optical monitoring purposes.

According to preferred embodiments, the measurement module of the invention may further comprise a housing, wherein the first optical path and the second optical path may be formed totally or partly within the housing. The connection port and/or the coupling port may be formed through the housing. The housing of the measurement module may enclose at least some of the remaining components of the measurement module. The first and second optical path length regulator systems may be completely enclosed by the housing. The housing may be fluid-tight and/or dust-tight. Preferably, the housing may provide a degree of tightness according to IP64. The housing may comprise attachment means for mechanically attaching the measurement module to a laser processing module, in particular such that the laser processing module and the measurement module are optically coupled through the coupling port as explained below in further detail. In embodiments in which the measurement module comprises a focusing system, the focusing system may be arranged within the housing at least in part. For example, a collimating lens may be arranged within the housing of the measurement module while a focusing lens, which may be an f-theta lens, may be arranged outside of the housing of the measurement module, in particular in the housing of a laser processing module to which the measurement module may be optically coupled through the coupling port.

In embodiments in which the coupling port is configured for collimating a laser beam transmitted therethrough to the interior of the measurement module, coupling port may be formed as a collimating lens formed through the housing.

In preferred embodiments, the first optical path length regulator system may comprise a first group of tilted reflection elements for multiply reflecting laser light along the first optical path at reflecting surfaces thereof, wherein the reflective surfaces of the reflective elements of the first group may face each other and may be angled with respect to each other at least pairwise, such that a beam of said laser light incident upon the first group may be reflected several times between the reflective surfaces thereof. An extension of the first optical path between the tilted reflection elements of the first group may be adjustable by setting a relative position between said reflection elements of the first group. The first optical path length regulator system may be configured for implementing said first optical path length variation by setting the relative position between said reflection elements of the first group, in particular by displacing and/or tilting one or more of the reflection elements of the first group. Further, the second optical path length regulator system may comprise a second group of tilted reflection elements for multiply reflecting laser light along the second optical path at reflecting surfaces thereof, wherein the reflective surfaces of the reflective elements of the second group may face each other and may be angled with respect to each other at least pairwise, such that a beam of said laser light incident upon the second group may be reflected several times between the reflective surfaces thereof. An extension of the second optical path between the tilted reflection elements of the second group may be adjustable by setting a relative position between said reflection elements of the second group, in particular by displacing and/or tilting one or more of the reflection elements of the second group. The second optical path length regulator system may be configured for implementing said second optical path length variation by setting said relative position between said reflection elements of the second group.

The tilted reflection elements of the first group and/or the second group may be configured such that a respective beam of laser light is reflected at least 2, 3, 4, 5, 6, 8 or 10 times at the reflective surface of each of the tilted reflection elements of the first and/or the second group respectively.

Each of the first and second groups may hence comprise one or more pairs of tilted reflection elements, each possibly configured as described in EP 4 296 612 A1, see for example embodiments shown in Figures 5 and 6 of EP 4 296 612 A1. As described therein, each group of tilted reflection elements may functionally operate as a plurality of conventional pairs of reflection elements having pairwise parallel reflective surfaces at which laser light is reflected once, shown for example in Figures 1 and 2 of EP 4 296 612 A1. By moving tilted reflection elements of a group of tilted reflection elements with respect to each other, the distance that a light beam being multiply reflected by the group of tilted reflection elements propagates through can be adjusted. This distance may for example be increased by increasing a separation distance between two or more tilted reflection elements of the group or by increasing a relative angle between said two or more tilted reflection elements of the group. Conversely, a distance may be reduced by reducing the separation distance between said two or more tilted reflection elements of the group or by reducing the angle between them. Due to the multiple reflections of the laser light between the reflection elements of each group of tilted reflection elements, a small movement of one or more of the reflection elements of a group of tilted reflection elements may be sufficient for implementing a relatively large adjustment of the optical path length of the respective optical path. For example, if two reflection elements of a group of tilted reflection elements are configured for reflecting a beam of laser light incident upon the pair 4 times at each reflective surface, an increase D in the distance between the two reflection elements of the pair may cause an increase in the optical path length of the second optical path of the order of $k \cdot D$, where k may be, depending on the settings and/or on the direction of movement, a factor with a value from 4 to 12 or more. Therefore, the use of such groups of tilted reflection elements may allow very rapid and efficient adjustments of the first and second optical path lengths.

In preferred embodiments, the first group of tilted reflection elements may comprise a first reflection element, a second reflection element and a third reflection element for multiply reflecting the laser light along the first optical path at reflecting surfaces thereof. Each of the aforesaid reflection elements may have at least one reflective surface, possibly only one. The reflective surfaces of the first and second reflection elements may face each other and may be angled with respect to each other, such that a beam of said laser light incident upon the first group is reflected several times between the reflective surfaces of the first and second reflection elements. Likewise, the reflective surfaces of the third and second reflection elements may face each other and may be angled with respect to each other, such that a beam of said laser light incident upon the first group is reflected several times between the reflective surfaces of the third and second reflection elements. For a reflective surface of the second reflection element to face both a reflective surface of the first reflection element and a reflection surface of the third reflection element, the second reflection element, in particular said reflective surface thereof, may have greater dimensions, in particular greater length in a direction perpendicular to the reflective surface thereof, than each of the first and third reflection elements. An extension of the first optical path between the reflection elements of the first group may be adjustable by setting a relative position between the first and second reflection elements of the first group and/or between the second and third reflection elements of the first group. Accordingly, the first optical path length regulator system may be configured for implementing said first optical path length variation by setting said relative position between the first and second reflection elements of the first group and/or by setting said relative position between the second and third reflection elements of the first group. Setting a relative position between two or more reflection elements may imply, as used herein, displacing and/or tilting at least one of said two or more reflection elements.

The second reflection element of the first group may be movable, while the first and third reflection elements of the first group may be fixed, such that it may be possible to implement said first optical path length variation by moving the second reflection element with respect to the first and third reflection elements.

In preferred embodiments, a first angle between the first and second reflection elements, which may be from 5° to 20°, preferably from 10° to 15°, may be equal and opposed to a second angle between the second and third reflection elements, which may also be from 5° to 20°, preferably from 10° to 15°. Thus, the first, second and third reflection elements may be positioned and oriented corresponding to the sides of a triangle, which may optionally be an isosceles triangle with the second reflection element corresponding to a larger base of the triangle and the first and third reflection elements corresponding to shorter sides of the triangle. For example, each of the first and third reflection elements may be angled with respect to the second reflection element at 12°, such that an angle between the first and third reflection elements may be 156°. In other examples, an angle between the first and second reflection elements may be different from an angle between the third and second reflection elements.

The extension of the first optical path between the tilted reflection elements of the first group, in particular between the first and second reflection elements and between the third and second reflection elements, may be adjustable by moving the second reflection element with respect to the first and third reflection elements, preferably linearly, e.g. following a straight line, which straight line may be perpendicular to a reflective surface of the second reflection element, such that a first angle between the first and second reflection elements and a second angle between the third and second reflection elements remain constant. As previously mentioned, the first and third reflection elements may be fixed, while the second reflection element may be movable. Thus, it may be possible to modify the extension of the first optical path between the first and second reflection elements and between the third and second reflection elements by moving only the second reflection element with respect to the first and third reflection elements.

In preferred embodiments, each of the first, second and third reflection elements may be configured for reflecting a beam of laser light incident upon the first group of reflection elements such that the beam of laser light is reflected N times at a reflective surface of each of the first and third reflection elements and 2N times at the reflective surface of the second reflection element, wherein N is a positive integer, preferably at least 2, 4, 6, 8, 10 or more.

The first group may be configured such that a laser beam incident upon the first group enters the first group between the first and third reflection elements for being reflected first at the second reflection element and/or such that said laser beam incident upon the first group exits the first group between the first and third reflection elements after being reflected last at the second reflection element.

The same configuration described previously for the first group of reflection elements also applies to the second group of reflection elements. Thus, in preferred embodiments, the second group of tilted reflection elements may comprise a fourth reflection element, a fifth reflection element and a sixth reflection element for multiply reflecting the laser light along the second optical path at reflecting surfaces thereof. Each of the aforesaid reflection elements may have at least one reflective surface, possibly only one. The reflective surfaces of the fourth and fifth reflection elements may face each other and may be angled with respect to each other, such that a beam of said laser light incident upon the second group is reflected several times between the reflective surfaces of the fourth and fifth reflection elements. Likewise, the reflective surfaces of the sixth and fifth reflection elements may face each other and may be angled with respect to each other, such that a beam of said laser light incident upon the second group is reflected several times between the reflective surfaces of the sixth and fifth reflection elements. For a reflective surface of the fifth reflection element to face both a reflective surface of the fourth reflection element and a reflection surface of the sixth reflection element, the fifth reflection element, in particular said reflective surface thereof, may have greater dimensions, in particular greater length in a direction perpendicular to the reflective surface thereof, than each of the fourth and sixth reflection elements. An extension of the second optical path between the reflection elements of the second group may be adjustable by setting a relative position between the fourth and fifth reflection elements of the second group and/or between the fifth and sixth reflection elements of the second group. Accordingly, the second optical path length regulator system may be configured for implementing said second optical path length variation by setting said relative position between the fourth and fifth reflection elements of the second group and/or by setting said relative position between the fifth and sixth reflection elements of the second group. Setting a relative position between two or more reflection elements may imply, as used herein, displacing and/or tilting at least one of said two or more reflection elements.

The fifth reflection element of the second group may be movable, while the fourth and sixth reflection elements of the second group may be fixed, such that it may be possible to implement said second optical path length variation by moving the fifth reflection element with respect to the fourth and sixth reflection elements.

In preferred embodiments, a third angle between the fourth and fifth reflection elements, which may be from 5° to 20°, preferably from 10° to 15°, may be equal and opposed to a fourth angle between the fifth and sixth reflection elements, which may also be from 5° to 20°, preferably from 10° to 15°. Thus, the fourth, fifth and sixth reflection elements may be positioned and oriented corresponding to the sides of a triangle, which may optionally be an isosceles triangle with the fifth reflection element corresponding to a larger base of the triangle and the fourth and sixth reflection elements corresponding to shorter sides of the triangle. For example, each of the fourth and sixth reflection elements may be angled with respect to the fifth reflection element at 12°, such that an angle between the fourth and sixth reflection elements may be 156°. In other examples, an angle between the fourth and fifth reflection elements may be different from an angle between the sixth and fifth reflection elements.

The second group may be configured such that a laser beam incident upon the second group enters the second group between the fourth and sixth reflection elements for being reflected first at the fifth reflection element and/or such that said laser beam incident upon the second group exits the second group between the fourth and sixth reflection elements after being reflected last at the fifth reflection element.

The first optical path length regulator system and the second optical path length regulator system may be configured for implementing the same conversion relation between a shifting of a movable reflection element, in particular of the second reflection element and the fifth reflection element, respectively, and a resulting variation of the first optical path and the second optical path, respectively. This may be achieved, for example, by correspondingly setting the angles between the reflection elements of each group of reflection elements. Comparing the first and second angles of the first group with the third and fourth angles of the second group, such angles may be pairwise equal, the first angle being equal to the third angle and the second angle being equal to the fourth angle, with all four angles being possibly equal. Such at least pairwise equality of the angles in the first and second groups may be used for implementing the same conversion relation both in the first optical path length regulator system and in the second optical path length regulator system, such that a given shifting of the second reflection element in the first group by a distance D produces a first optical path length variation $\Delta 1$ of the first optical path length, and the same given shifting of the fifth reflection element in the second group by the distance D produces a second optical path length variation $\Delta 2$ of the second optical path length, with $|\Delta 1| = |\Delta 2|$, in particular $\Delta 1 = -\Delta 2$.

In other embodiments, the first angle may be different from the third angle and/or the second angle may be different from the fourth angle, whereby different conversion relations may be implemented for the first and second optical path length regulator systems, meaning that a given shifting of the second reflection element in the first group by a distance D may produce a first optical path length variation $\Delta 1$ of the first optical path length, and the same given shifting of the fifth reflection element in the second group by the distance D may produce a second optical path length variation $\Delta 2$ of the second optical path length, with $|\Delta 1| \neq |\Delta 2|$.

The extension of the second optical path between the tilted reflection elements of the second group, in particular between the fourth and fifth reflection elements and between the sixth and fifth reflection elements, may be adjustable by moving the fifth reflection element with respect to the fourth and sixth reflection elements, preferably linearly, e.g. following a straight line, which straight line may be perpendicular to a reflective surface of the fifth reflection element, such that a first angle between the fourth and fifth reflection elements and a second angle between the sixth and fifth reflection elements remains constant. As previously mentioned, the fourth and sixth reflection elements may be fixed, while the fifth reflection element may be movable. Thus, it may be possible to modify the extension of the second optical path between the fourth and fifth reflection elements and between the sixth and fifth reflection elements by moving only the fifth reflection element with respect to the fourth and sixth reflection elements.

In preferred embodiments, each of the fourth, fifth and sixth reflection elements may be configured for reflecting a beam of laser light incident upon the second group of reflection elements such that the beam of laser light is reflected N times at a reflective surface of each of the fourth and sixth reflection elements and 2N times at the reflective surface of the fifth reflection element, wherein N is a positive integer, preferably at least 2, 4, 6, 8, 10 or more.

In preferred embodiments, the previously described coupling between the first optical path length regulator system and the second optical path length regulator system may correspond to a coupling between the second reflection element of the first group and the fifth reflection element of the second group, for example a mechanical coupling. For example, the second reflection element of the first group and the fifth reflection element of the second group may be coupled and/or connected to each other, for example via a mechanical connection, possibly a rigid mechanical connection and/or a one-piece mechanical connection, such that a movement of the second reflection element of the first group is associated to a corresponding movement of the fifth reflection element of the second group. For example, a linear shifting of the second reflection element of the first group may imply an equal linear shifting of the fifth reflection element of the second group. In other words, the second reflection element of the first group and the fifth reflection element of the second group may be comoving.

In preferred embodiments, the first group and/or the second group may comprise one or more pairs of tilted reflection elements, wherein each pair of reflection elements may comprise two reflection elements symmetrically arranged with respect to an axis of symmetry arranged between both reflection elements. Each such pair of reflection elements may correspond to a pair of reflection elements as described in EP 4 296 612 A1. "Pair" may refer herein to any two reflection elements of the same group of reflection elements at which light is reflected, back and forth, preferably several times, for example, 2, 3, 4, 5, 6, 8, 10 or more times, in a corresponding optical path length regulator system. For example, referring to the previously described configurations, the first reflection element and the second reflection element of the first group may be considered a pair of the first group and the third reflection element and the second reflection element of the first group may be considered another pair of the first group. Further, the fourth reflection element and the fifth reflection element of the second group may be considered a pair of the second group and the sixth reflection element and the fifth reflection element of the second group may be considered another pair of the second group. The two tilted reflection elements of each pair of tilted reflection elements may be configured for reflecting a beam of laser light incident upon the pair 2, 4, 6, 8, 10 or more times at each reflective surface thereof, i.e. at a reflective surface of each of said reflection elements of the pair.

In preferred embodiments, each of the one or more pairs of tilted reflection elements of the first group and/or of the second group may comprise a movable reflection element, while the other reflection element of the pair may optionally be a fixed reflection element. The movable reflection elements of all of the one or more pairs of the corresponding group may preferably be movable together, i.e. comoving, for adjusting the first and/or second optical path length, respectively. Also in this case, the movable reflection elements of all of the one or more pairs of the corresponding group may be coupled and/or connected together, for example by a mechanical connection, which may possibly be a rigid mechanical connection.

Thus, the previously described configurations in which the first group may comprise a fixed first reflection element, a fixed third reflection element and a movable second reflection element movable with respect to the first and third reflection elements, may be replaced by an alternative configuration in which the first group comprises two pairs of reflection elements configured such that a beam of laser light is multiply reflected back and forth between the reflection elements of a first pair of said two pairs, said first pair comprising a first movable reflection element and a first fixed reflection element, then transmitted to a second pair of said two pairs, said second pair comprising a second movable reflection element and a second fixed reflection element, and then multiply reflected back and forth between the reflection elements of the second pair of said two pairs, wherein the first movable reflection element and the second movable reflection element may be configured for being movable together for adjusting the first optical path length. Additionally or alternatively, the previously described configurations in which the second group may comprise a fixed fourth reflection element, a fixed sixth reflection element and a movable fifth reflection element movable with respect to the fourth and sixth reflection elements, may be replaced by an alternative configuration in which the second group comprises two pairs of reflection elements configured such that a beam of laser light is multiply reflected back and forth between the reflection elements of a first pair of said two pairs, said first pair comprising a third movable reflection element and a third fixed reflection element, then transmitted to a second pair of said two pairs, said second pair comprising a fourth movable reflection element and a fourth fixed reflection element, and then multiply reflected back and forth between the reflection elements of the second pair of said two pairs, wherein the third movable reflection element and the fourth movable reflection element may be configured for being movable together for adjusting the second optical path length.

Although the first optical path length regulator system and the second optical path length regulator system have been separately described above, in some embodiments, the first and second optical path length regulator systems may have some elements in common, in particular some of the reflection elements thereof. In the previously described embodiments in which the first optical path length regulator system comprises a first group of reflection elements and the second optical path length regulator system comprises a second group of reflection elements, the first and second groups may hence have reflection elements in common, meaning that a reflection element may be integrated both in the first group and in the second group and may be involved in adjusting the first optical path length and the second optical path length. Likewise, in the previously described embodiments in which the first optical path length regulator system comprises one or more pairs of tilted reflection elements and the second optical path length regulator system comprises one or more pairs of tilted reflection elements, the one or more pairs of the first optical path length regulator system and the one or more pairs of the first and second groups may hence have reflection elements in common, meaning that a reflection element may be integrated both in a pair involved in adjusting the first optical path length and in a pair involved in adjusting the second optical path length.

For example, the first and second optical path length regulator systems may comprise one or more movable common elements, which may preferably have reflective surfaces on both sides thereof, one of the reflecting surfaces being integrated in the first optical path length regulator system and the other one of the reflecting surfaces being integrated in the second optical path length regulator system. A movement of such movable common reflection element may simultaneously affect, i.e. increase or decrease, both the first optical path length and the second optical path length.

For example, in embodiments as previously described in which the first group comprises first to third reflection elements with a second reflection element being movable and the second group comprises fourth to sixth reflection elements with a fifth reflection element being movable, it may be possible to replace the second reflection element and the fifth reflection element by a single common movable reflection element having one reflective surface integrated in the first optical path length regulator system and another reflective surface integrated in the second optical path length regulator system, said two reflective surfaces being preferably formed on opposite sides of the common movable reflection element.

In preferred embodiments, the reference optical reflector may be movable for fine-adjusting the first optical path length of the first optical path. Preferably, the reference optical reflector may be rotatable, tiltable and/or shiftable for this purpose. The ability to move the reference optical reflector may allow correcting the first optical path length with fine adjustments, for example to thereby offsets that may result, for example, from a deviation from a perfect symmetry between the first optical path length regulator system and the second optical path length regulator system, which may arise in any real system, in contrast to an ideal or theoretical system. For this purpose, the movement of the reference optical reflector may be coordinated with the operation of the first and second optical path length regulator systems, for example by being governed by a common control unit, or by a dedicated control unit that is correspondingly coordinated with the control units governing the operation of the first and second optical path length regulator systems, in particular according to any of the previously described embodiments of the invention. However, in other embodiments, the reference optical reflector may be fixed, i.e. non-movable, in particular not controllably movable during operation of the measurement module.

Each of the first and second optical path length regulator system may comprise a motion control unit specifically configured for controllably setting the optical path length difference by operating upon one or more optical elements, in particular upon one or more of the previously described reflection elements of the first or second group, respectively. For example, a motion control unit of the second optical path length regulator system may be programmed to associate to each specific value of the second optical path length, a corresponding setting of the one or more optical elements of the second optical path length regulator system. For instance, for implementing a second optical path length variation of 100 mm, the control unit of the second optical path length regulator system may move the one or more optical elements thereof, for example the previously described fifth reflection element, such as to modify the second optical path length of the second optical path by 100 mm accordingly. This may in particular comprise shifting the one or more optical elements, for example the previously described fifth reflection element, along a corresponding predefined shifting path, for example manually or automatically. The same applies analogously to a motion control unit of the first optical path length regulator system.

In preferred embodiments of the invention, the measurement module may further comprise a distance detection device (the previously mentioned one) optically coupled to the connection port and configured for performing a distance detection based on an interference of the laser light received by the distance detection device from the first optical path with the laser light received by the distance detection device from the second optical path. The distance detection device may in particular include or be connectable to an interference sensor configured for detecting and analysing an interference of the laser light received from the first and second optical path.

The distance detection device and the measurement module may be structurally independent from each other. For example, each of the distance detection device and the measurement module may be enclosed by a corresponding housing.

In preferred embodiments of the invention, the measurement module may further comprise one or more monitoring ports and one or more corresponding optical elements as described in EP 4 296 612 A1, wherein each optical element may be configured for reflecting a first part of laser light propagating along the second optical path and for transmitting a second part of said laser light propagating along the second optical path, such that said first or second part is extracted from the second optical path and directed towards the monitoring port. In other words, said one or more corresponding optical elements may be dichroic elements, possibly configured for transmitting different wavelength ranges. Said laser light extractions may correspond, for each extraction through a monitoring port, to a corresponding monitoring laser beam used for monitoring a laser processing performed by a laser processing module to which the measurement module may be coupled. The one or more monitoring port may then be used for connecting corresponding optical monitoring devices to obtain information about a laser process being carried out with a laser processing module to which the measurement module of the invention may be connected as explained further below. The laser light from which the monitoring laser beam(s) is/are extracted may be generated by the optical monitoring device and may copropagate with the measurement beam at least over a part of the second optical path. At least one of the one or more optical elements, which may in particular be or comprise a dichroic filter, may correspond to one of the reflection elements of the measurement module, in particular to one of the reflection elements of the second optical path length regulator system. The one or more monitoring ports and the one or more optical elements may be configured to extract said corresponding first or second part from the second optical path at a corresponding position of the second optical path between the second optical path length regulator system and the connection port. The one or more monitoring ports may be arranged at different positions along the second optical path. For example, in embodiments comprising a focusing system arranged in the second optical path between the connection port and the second optical path length regulator system, a first monitoring port and a first dichroic element may be configured to extract said first or second part from the second optical path at a position of the second optical path between the focusing system and the connection port. This allows extracting light for monitoring purposes in a manner that is not sensible to variations in the second optical path length, in particular to the previously mentioned intended and unintended variations. Meanwhile, a second monitoring port and a second dichroic element may be configured to extract said first or second part from the second optical path at a first position of the second optical path between the focusing system and the second optical path length regulator system and a third monitoring port and a third dichroic element may be configured to extract said first or second part from the second optical path at a second position of the second optical path between the focusing system and the second optical path length regulator system, different from said first position.

As previously mentioned, the measurement module and the distance detection device may in combination implement an interferometer, wherein the first and second optical paths may respectively correspond to the reference arm and the object arm of the interferometer. The distance detection device, in particular the interference sensor thereof, may be configured for detecting an interference of a laser beam corresponding to the reference arm with a laser beam corresponding to the object arm to perform distance detection based thereon in a manner that is known to the skilled person according to conventional interferometry techniques.

Accordingly, a second aspect of the invention refers to an interferometer system comprising distance detection device, a coupling port, and a measurement module. The measurement module may correspond to a measurement module according to any of the previously described embodiments of the first aspect of the invention and the distance detection device may correspond to a distance detection device as described hereinabove.

In any case, the measurement module of the interferometer system according of the second aspect of the invention defines a first optical path corresponding to a reference arm of the interferometer system and a second optical path corresponding to an object arm of the interferometer system. The measurement module comprises an optical reflector arranged in the first optical path for reflecting back laser light received along the first optical path. Further, the measurement module comprises an optical path length regulator system configured for adjusting an optical path length of the second optical path, i.e., of the object arm of the interferometer system.

The coupling port of the interferometer system according of the second aspect of the invention is configured for optically coupling the second optical path with a laser processing module, in particular with a measurement beam path thereof, as explained in more detail above and below.

The distance detection device is configured for performing distance measurements based on an interference of laser light transmitted along the first optical path with laser light transmitted along the second optical path.

A third aspect of the invention refers to a laser processing apparatus comprising a laser processing module and a measurement module according to any of the embodiments of the first aspect of the invention described above and/or an interferometer system according to any of the embodiments of the second aspect of the invention described above. The laser processing module is configured for laser-processing a workpiece on a work field using a work beam. The work beam may be a laser beam independent from a laser being transmitted within the measurement module, in particular through the second optical path of the measurement module. The measurement module is optically coupled with the laser processing module by the coupling port thereof for receiving and outputting laser light from and to the laser processing module in the form of a measurement beam. The laser processing module may in particular be a so-called 2-axes scanner with an f-theta lens, a so-called 3-axes scanner or a so-called 4-axes scanner.

The laser processing module may comprises an optical element for reflecting one of the work beam and the measurement beam and for transmitting therethrough the other one of the work beam and the measurement beam. The optical element may be configured for reflecting light in a wavelength range corresponding to the work beam and for transmitting light in a wavelength range corresponding to the measurement beam. Alternatively, the optical element may be configured for transmitting light in a wavelength range corresponding to the work beam and for reflecting light in a wavelength range corresponding to the measurement beam. The optical element may for example comprise a dichroic element, such as a dichroic filter.

The measurement beam may correspond to light in the infrared part of the spectrum, in particular with wavelengths within the range of 700 nm to 1400 nm, preferably from 800 nm to 1000 nm, more preferably from 815 nm to 850 nm, for example 830 nm. The work beam may correspond to light in a wavelength range different from, possibly bigger or smaller than, the wavelength range corresponding to the measurement beam. Thus, the optical element of the laser processing module may be transmissive for a part of the spectrum, in particular of the infrared spectrum, while being reflective for the rest of the spectrum or at least for a part thereof. As a result, the measurement beam and the work beam may propagate separately on one side of the optical element, before being reflected at or transmitted through the optical element, while they may propagate along the same optical path on the other side of the optical element, after being reflected at or transmitted through the optical element.

The laser processing module may further comprise a deflection unit (a dynamic scanning unit) configured for deflecting (scanning) the work beam and the measurement beam to and from the workpiece and/or the work field. The deflection unit may for example comprise a pair of rotatably mirrors tiltable around mutually orthogonal axes, i.e., a so-called XY-scanning unit, possibly including corresponding galvanometers. The deflection unit may be configured for controllably scanning the measurement beam and the work beam over the work field, on which a workpiece being laser-processed by the laser processing module may be arranged. Such deflection unit may be the only deflection unit at which a beam of laser light transmitted through the second optical path of the measurement module is controllably and adjustably deflected.

The deflection unit may be arranged after the optical element along the optical paths of the measurement beam and the work beam. Thus, the work beam and the measurement beam may be deflected by the deflection unit towards a corresponding target point of the work field after being transmitted through or reflected at the optical element.

A work beam path and a measurement beam path may be defined in the laser processing module for the work beam and the measurement beam, respectively. The work beam path may be defined such that the work beam may be reflected/transmitted by the optical element towards the deflection unit and deflected by the deflection unit to the workpiece and/or the work field.

The measurement beam may propagate in the measurement module along the second optical path of the measurement module. Further, the measurement beam path may be defined such that the measurement beam propagates from the coupling port of the measurement module to the optical element and to the deflection unit and back to the coupling port, being transmitted/reflected by the optical element to and from the deflection unit, being deflected by the deflection unit to and from the workpiece and/or the work field and being reflected back at the workpiece and/or the work field. Thus, the measurement beam path and the second optical path may be thought of as different portions of an overall optical path over which the measurement beam propagates in the laser processing module and the measurement module, respectively.

Thus, the work beam may first propagate from an input, at which the work beam may be fed into the laser processing module (or from a corresponding light source) to the optical element, at which the work beam is reflected or transmitted towards the deflection unit, which then deflects the work beam towards a corresponding target point on the workpiece and/or on the work field to laser-process a work material by transmitting thermal energy thereto.

The measurement beam may correspond to laser light that is fed into the measurement module through the connection port and propagates along the second optical path thereof, including through the second optical path length regulator system, then into the laser processing module through the coupling port towards the optical element, at which the measurement beam may be transmitted or reflected, respectively (if the work beam is reflected, the measurement beam may be transmitted and vice versa) towards the deflection unit, which may deflect the measurement beam in the same direction as the work beam for performing a measurement, for example a distance measurement.

The work beam and the measurement beam may hence have a common path between the optical element and the workpiece. At the point of the workpiece on which the measurement beam is incident, the measurement beam may be reflected back towards the deflection unit at least in part, is then deflected back towards the optical element and transmitted or reflected, depending on the case, towards the coupling port, through which the measurement beam re-enters into the measurement module, propagates back along the second optical path and reaches the connection port to be transmitted to a detection device at which interference of the measurement beam with the laser light propagating along the first optical path of the measurement module can be analysed to perform distance detection.

Advantageously, the measurement module may allow adapting an optical path length of the measurement beam in order to compensate at least partly any controlled or uncontrolled variations thereof, for example variations in the work distance of the laser processing module, wherein the work distance may be understood herein as a minimal/shortest distance between a housing of the laser processing module and the work field thereof. Further, the measurement module may allow adapting the (first) optical path length of the reference arm, possibly simultaneously with an adaptation of the (second) optical path length of the measurement or object arm. Thus, the technical advantages of a measurement module according to the first aspect of the invention are hence thereby exploited for a laser processing apparatus.

In preferred embodiments, the laser processing apparatus may further comprise the distance detection device described above for a measurement module according to the first aspect of the invention and/or the interferometer system according to the second aspect of the invention. The distance detection device may be optically coupled to the connection port of the measurement module and may be configured for determining, based on an interference of the measurement beam with laser light propagating in the measurement module along the first optical path, variations in a distance between the work field and/or workpiece and the deflection unit, in particular between an optical center of a mirror of the deflection unit closest to the work field and a position of the work field on which the measurement beam is incident. Additionally or alternatively, the distance detection device may be configured for determining said distance (in absolute or relative terms) based on an interference of the measurement beam with laser light propagating in the measurement module along the first optical path.

The laser processing apparatus may further comprise a control unit configured for controlling the second optical path length regulator system as described in detail in EP 4 296 612 A1 for a corresponding "control unit" or "further control unit".

According to preferred embodiments, the laser processing apparatus, in particular the laser processing module, may further comprise a work beam focusing system, sometimes called "focus shifter" or "z-shifter", configured for focusing the work beam. Preferably, the work beam focusing system may be configured for focusing only the work beam, i.e. not the measurement beam, which may be focused according to the present invention by a dedicated focusing system comprised in the measurement module. Preferably, the measurement beam may not propagate through the work beam focusing system.

The work beam focusing system may have a variable focal length and may be arranged in some embodiments in the work beam path between the optical element and a source or an input of the work beam, from which the work beam may originate. This means that the laser processing module may correspond to a pre-focusing laser processing module, i.e. to a so-called 3-axes scanner, for example similar to the one described in WO 2018/078137 A1. The previously described control unit (or further control unit) may be configured for controlling the pre-focusing system, possibly based on a distance and/or a variation in a distance determined by the distance detection device.

In some embodiments, the laser processing apparatus, in particular the laser processing module, may comprise an f-theta lens configured for focusing the work beam, possibly arranged through a housing of the laser processing modulus, and may further comprise a focus shifting system for shifting a focus position of the work beam transmitted and focused by the f-theta lens.

In preferred embodiments of the invention, the measuring module may comprise the focusing system described above for the measuring module of the first aspect of the invention, which may be configured for focusing the measuring beam on the work field and/or on the workpiece, in particular in a position corresponding to a focus of the work beam. By staying focused on the work field and/or on the workpiece, thanks to the focusing system and to the compensation allowed by the optical path length regulator system, the measurement beam allows performing distance measurements with optimised signal-to-noise ratio and with improved accuracy even for big values of the deflection angle.

According to preferred embodiments, the measurement beam may be formed by light in a wavelength range from 700 nm to 1400 nm, preferably from 800 nm to 1000 nm, more preferably from 815 nm to 850 nm, for example 830 nm. Further, the work beam may be formed by light in a wavelength range different from the wavelength range of the measurement beam, for example from 1000 nm to 1100 nm, possible using a YAG-Laser. However, the work beam may be formed by light in other wavelength ranges, such as from 500 nm to 550 nm.

In preferred embodiments, a minimal distance between the work field and the laser processing module, in particular a housing thereof (i.e. the work distance) may be variable within a range from 200 mm to 1200 mm, preferably from 250 mm to 750 mm, more preferably from 300 mm to 700 mm. As previously described, the optical path length regulator system of the measurement module may be configured to implement compensations of the optical path length of the measurement beam, which is transmitted along the second optical path, corresponding to these ranges.

A size of the work field associated to the laser processing module may be variable within a range from $200 \times 200$ mm2 to $1400 \times 1400$ mm$^2$, in particular as a function of the work distance. The size of the work field may be proportional to the work distance. For example, a work field size of $250 \times 250$ mm$^2$ may be associated to a work distance of 250 mm, while a work distance of 1000 mm may be associated with a size of the work field of $850 \times 850$ mm$^2$. Notably, the work field may be square but this needs not be the case. According to other related embodiments, the work field may be rectangular, polygonal or circular.

In preferred embodiments of the invention, the measuring module may comprise the housing described above for the first aspect of the invention and the laser processing module may comprise a further housing enclosing at least some of the remaining components of the laser processing module. The work beam path and the measurement beam path may be defined within the housing of the laser processing module at least in part. In particular, the work beam path may be completely comprised within the housing of the laser processing module. The measurement beam may be partly comprised in the housing of the laser processing module and partly comprised in the housing of the measurement module, with the section of the measurement beam comprised in the housing of the measurement module corresponding to the second optical path of the measurement module.

A further coupling port connectable to the coupling port of the measurement module may be formed through the housing of the laser processing module. Preferably, the housing of the laser processing module may be fluid-tight and/or dust-tight, in particular according to IP64.

Preferably, the measuring module and the laser processing module may be mutually attachable, in particular mechanically. The housing of the measurement module may be attachable to the housing of the laser processing module, in particular such that the measurement module may be arrangeable adjacent to the laser processing module. When the laser processing module and the measurement module are mutually attached, the measurement module, in particular the second optical path, may be optically coupled with the laser processing module by means of the coupling port of the measurement module and of the (further) coupling port of the laser processing module.

BRIEF DESCRIPTION OF THE DRAWINGS

Fig. 1     shows a schematic view of a measurement module according to some embodiments of the invention.

Fig. 2     shows a schematic isolated view of a group of reflection elements of the second optical path length regulator system of measurement modules according to embodiments of the invention. The first optical path length regulator system may have an analogous, possibly mirror-symmetrically arranged, configuration.

Fig. 3     shows the measurement module of Fig. 1 after modifying a position of a movable reflection element of each of the first optical path length regulator system and the second optical path length regulator system.

Fig. 4     shows a schematic view of a measurement module according to some embodiments of the invention.

Fig. 5     shows a schematic view of a measurement module according to some embodiments of the invention.

Fig. 6     shows a schematic isolated view of a linear motor connectable to the first and/or second optical path length regulator system according to embodiments of the invention.

Fig. 7     shows the measurement module of Fig. 5 after modifying a position of a movable reflection element of each of the first and second optical path length regulator system.

Fig. 8     shows a schematic view of a measurement module according to some embodiments of the invention.

Fig. 9     shows a schematic view of a laser processing apparatus according to embodiments of the invention including the measurement module of Fig. 5 and 7.

Fig. 10     shows a schematic view of a laser processing apparatus according to embodiments of the invention including the measurement module of Fig. 5 and 7.

DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

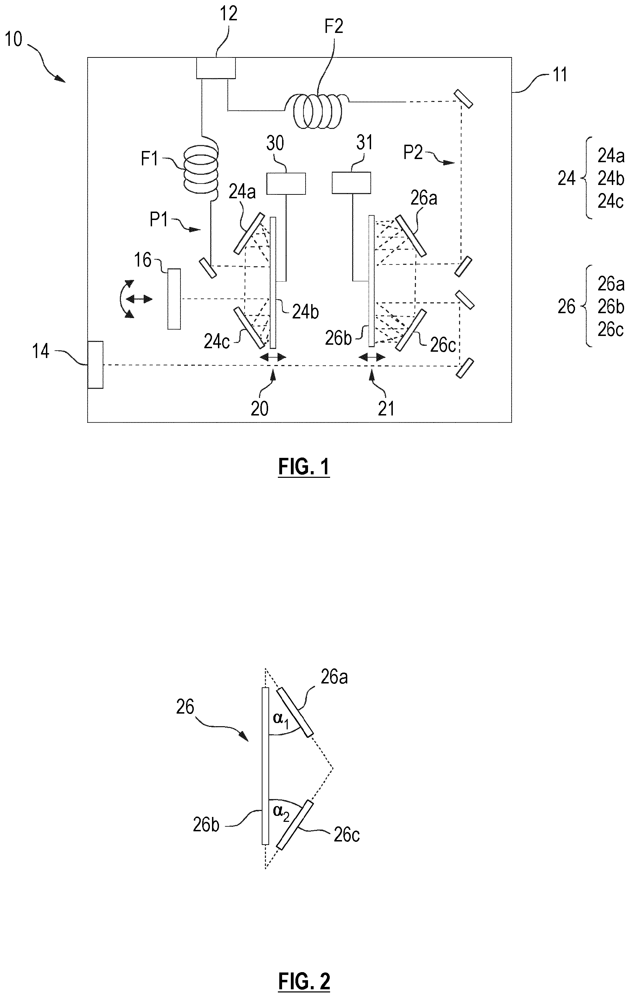

The same reference signs are used in Figs. 1-9 for indicating the same elements.

Fig. 1 shows a schematic view of a measurement module 10 according to an embodiment of the invention. The measurement module 10 comprises a housing 11 in which a connection port 12 and a coupling port 14 are formed. The connection port 12 allows optically coupling the measurement module 10 to a distance detection device. The coupling port 14 allows optically coupling the measurement module 10 to a laser processing module of a laser processing apparatus in which the measurement module 10 may be integrated.

The measurement module 10 defines a first optical path P1 and a second optical path P2 for laser light received and outputted through the connection port 12. The first optical path P1 and the second optical path P2 can be considered, respectively, as the reference arm and the object arm of an interferometric setup.

The first optical path P1 is defined between the connection port 12 and a reference optical reflector 16, which may for example be a mirror. The optical reflector 16 determines, with its current position and orientation, a first optical path length of the first optical path P1. The reference optical reflector 16 is movable, in particular shiftable and tiltable, such that the first optical path length can be fine-adjusted by correspondingly moving the reference optical reflector 16. In the embodiment shown in Fig. 1, the first optical path P1 comprises an optional optical fiber F1, through which laser light inputted and outputted through the connection port 12 propagates to and from the reference optical reflectors 16, at which this laser light is reflected back.

A section of the first optical path P1 runs through a first optical path length regulator system 20, which is configured for adjusting the first optical path length thereof. The first optical path length regulator system 20 can adjust an optical path length of the optical path running between the connection port 12 and the reference optical reflector 16. In the exemplary embodiment of Fig. 1, the first optical path length regulator system 20 comprises a first group 24 of tilted reflection elements. The first group 24, which comprises a first reflection element 24a, a second reflection element 24b and a third reflection element 24c, is configured such that a beam of laser light being transmitted through the first optical path P1 from and to the reference optical reflector 16 is multiply reflected at each of the reflecting surfaces of the reflection elements 24a, 24b and 24c. For this purpose, the reflective surfaces of the reflection elements 24a, 24b and 24c, at which laser light of said beam is reflected, are angled with respect to each other and are facing each other. In the exemplary embodiment of Fig. 1, the laser beam incident upon the first group 24 is reflected three times at the reflective surfaces of each of the reflection elements 24a and 24c and six times at the reflective surface of the reflection element 24b. In other related embodiments, the first group 24 can comprise a larger number of reflection elements, with more or fewer reflections at each of the reflective surfaces thereof, and the first optical path length regulator system can comprise a plurality of groups of reflection elements.

In the embodiment shown in Fig. 1, the second reflection element 24b is movable and can be linearly shifted left and right in order to decrease or increase, respectively, the first optical path length within a range of variation of 2 $\mu$m to 450 mm, while the first and third reflection elements 24a and 24c are fixed. The movement of the second reflection element 24b is controlled by a first electromechanical control unit 30, which can comprise and/or be connected to a motor device for driving a movement of the second reflection element 24b. Due to the multiple reflections at each of the reflection elements 24a, 24b and 24c of the first group 24, a relatively small movement of the second reflection element 24b can implement a rapid relatively large variation of the first optical path length between the connection port 12 and the reference optical reflector 16.

In the exemplary embodiment shown, the reference optical reflector can be shifted left and right and can also be tilted, as indicated by arrows in Fig. 1.

The second optical path P2 is defined between the connection port 12 and the coupling port 14. Laser light received through the connection port 12 propagates from the connection port 12 to the coupling port 14 and back to the connection port 12 through the second optical path P2.

The measurement module 10 further comprises a second optical path length regulator system 21. A portion of the second optical path P2 extends through the second optical path length regulator system 21, which is configured for adjusting an optical path length of the second optical path P2.

In the exemplary embodiment of Fig. 1, the second optical path length regulator system 21 comprises a second group 26 of tilted reflection elements. The second group 26, which comprises a fourth reflection element 26a, a fifth reflection element 26b and a sixth reflection element 26c, is configured such that a beam of laser light being transmitted through the second optical path P2 from and to the coupling pot 14 is multiply reflected at each of the reflecting surfaces of the reflection elements 26a, 26b and 26c. For this purpose, the reflective surfaces of the reflection elements 26a, 26b and 26c, at which laser light of said beam is reflected, are angled with respect to each other and are facing each other. In the exemplary embodiment of Fig. 1, the laser beam incident upon the second group 26 is reflected four times at the reflective surfaces of each of the reflection elements 26a and 26c and eight times at the reflective surface of the reflection element 26b. In other related embodiments, the second group 26 can comprise a larger number of reflection elements, with more or fewer reflections at each of the reflective surfaces thereof, and the second optical path length regulator system 21 can comprise a plurality of groups of reflection elements.

In the embodiment shown in Fig. 1, the fifth reflection element 26b is movable and can be linearly shifted left and right in order to increase or decrease, respectively, the second optical path length within a range of variation of 2 $\mu$m to 450 mm, while the fourth and sixth reflection elements 26a and 26c are fixed. The movement of the fifth reflection element 26b is controlled by a second electromechanical control unit 31, which can comprise and/or be connected to a motor device for driving a movement of the fifth reflection element 26b. Due to the multiple reflections at each of the reflection elements 26a, 26b and 26c of the second group 26, a relatively small movement of the fifth reflection element 26b can implement a rapid relatively large variation of the second optical path length between the connection port 12 and the coupling port 14.

Fig. 2 shows an isolated schematic view of the second group 26 of the second optical path length regulator system 21. The first group 24 of the first optical path length regulator system 20 has an analogous (mirror-symmetric) structure. As illustrated in Fig. 2, the reflection elements 26a, 26b and 26c of the second group 26 have reflecting surfaces that face each other, with the fourth and sixth reflection elements 26a and 26c being angled with respect to the fifth reflection element 26b, respectively, at angles $\alpha$1 and $\alpha$2, respectively. In the exemplary configuration shown, the reflection elements 26a, 26b and 26c are arranged forming an imaginary isosceles triangle, and the angles $\alpha$1 and a2 are equal, for example angles of 12°. In other related embodiments, the angles $\alpha$1 and $\alpha$2 can be non-equal.

In embodiments of the invention not shown in the attached drawings, alternatively to the second reflection element 24b and/or the fifth reflection element 26b being shiftable with fixed angles α1 and α2, the second group 26 can be configured such that the angles α1 and α2 are adjustable by correspondingly moving (rotating) the reflection elements 26a and 26b and/or the first group 24 can be correspondingly configured.

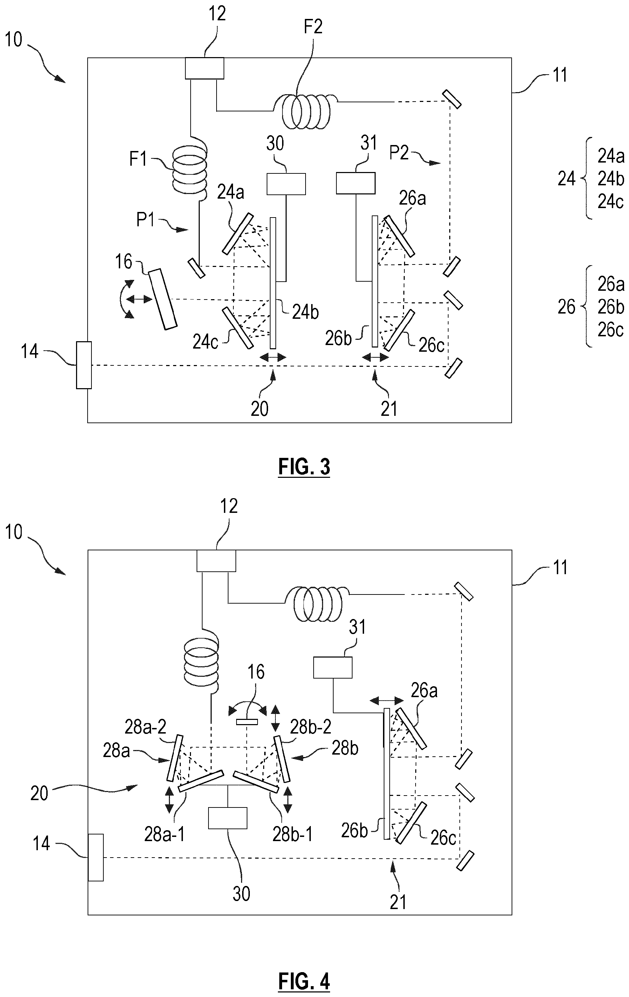

Fig. 3 shows a configuration of the measurement module 10 shown in Fig. 1, in which the second optical path length regulator system 21 has been operated to decrease the second optical path length and the first optical path length regulator system 20 has been operated, coupled with the second optical path length regulator system 21 by virtue of the coordination between the electromechanical control units 30 and 31, to correspondingly increase the first optical path length, possibly simultaneously. Thus, as compared to Fig. 1, in Fig. 3, the second reflection element 24b and the fifth reflection element 26b have moved right. Further, the reference optical reflector 16 is tilted, possibly to compensate an offset arising after operating the first and second optical path length regulator systems.

Thus, both the first optical path P1 and the second optical path P2 have a respective variable optical path length and that is adjustable by the respective optical path length regulator system 20 or 21, controlled by the respective electromechanical control unit 30 and 31. Rather than being completely independent, the electromechanical control units 30 and 31 are coordinated, for example by a common control software and/or by a common control processing unit, such that a variation of the first optical path length of the first optical path is coupled, in particular electronically coupled, with a variation of the second optical path length of the second optical path.

For example, the aforesaid coordination of the first and second electromechanical control units 30 and 31 can implement a coupling between the first optical path length variation of the first optical path length of the first optical path and the second optical path length variation of the second optical path length of the second optical path such that the first optical path length variation $\Delta1$ and the second optical path length variation $\Delta2$ are equal in absolute value, at least up to a tolerance of 10 μm, preferably 1 μm, and opposite in sign, i.e. such that $\Delta1=-\Delta2$. This means that if the first optical path length is increased by an optical distance $\Delta$, the second optical path length is decreased by the optical distance $\Delta$ and vice versa.

According to another example, the coordination of the first and second electromechanical control units 30 and 31 can implement a coupling between the first optical path length variation of the first optical path length of the first optical path and the second optical path length variation of the second optical path length of the second optical path such that an absolute value of the first optical path length variation $\Delta1$ and an absolute value of the second optical path length variation $\Delta2$ differ by a factor. This means that if the first optical path length is increased by an optical distance $\Delta$, the second optical path length is increased or decreased by a multiple of the optical distance $\Delta$, e.g. by $2\Delta$, $3\Delta$, $4\Delta$, $5\Delta$, 10A, $15\Delta$ or $20\Delta$ or more and vice versa.

Fig. 4 shows a schematic illustration of a related embodiment, in which the first optical path length regulator system 20, rather than comprising the first group 24 described with respect to Figs. 1-3, comprises two pairs 28a and 28b of tilted reflection elements, with each of the pairs 28a and 28b comprising two reflection elements symmetrically arranged with respect an axis of symmetric arranged between them. The first pair 28a comprises a movable reflection element 28a-1 and a static reflection element 28a-2, symmetrically arranged with respect to their axis of symmetry, which is arranged between them, and the second pair 28b comprises a movable reflection element 28b-1 and a static reflection element 28b-2, symmetrically arranged with respect to their axis of symmetry, which is arranged between them.

The pairs 28a and 28b are configured such that a beam of laser light incident upon them is reflected three times at a reflective surface of each of the corresponding reflection elements. Thus, a beam of laser light being transmitted through the first optical path is reflected three times on the reflective surface of each of the reflection elements 28a-1 and 28a-2 of the first pair 28a and three times on the reflective surface of each of the reflection elements 28b-1 and 28b-2 of the second pair 28b.

In this configuration, which in the exemplary case of Fig. 4 is shown for the first optical path length regulator system 20 and not for the second optical path length regulator system 21, but in other related embodiments can be implemented for the second optical path length regulator system 21 and not for the first optical path length regulator system 20 or both for the first optical path length regulator system 20 and for the second optical path length regulator system 21, the optical path length of the first optical path P1 can be varied by moving the movable reflection elements 28a-1 and 28b-1, controlled by the electromechanical control unit 30, for example by displacing down and/or by tilting the movable reflection elements 28a-1 and 28b-1. For example, the pairs 28a and 28b can be configured such that the movable reflection elements 28a-1 and 28b-1 are movable together up and down driven by the first electromechanical control unit 30.

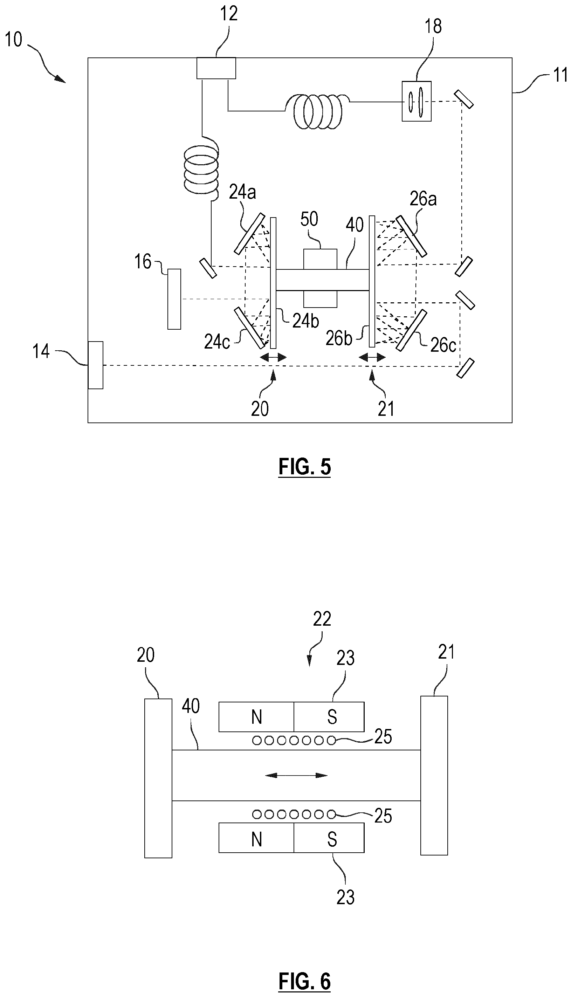

Fig. 5 shows a schematic embodiment of a related embodiment of the measurement module 10 of the invention in which the first and second optical path length regulator systems 20 and 21 are mechanically coupled rather than coupled via an electronically implemented coordination between respective electromechanical control units 30 and 31 as in the embodiments described above with respect to Figs. 1-4.

In the exemplary embodiment of Fig. 5, the mechanical coupling between first and second optical path length regulator systems 20 and 21 is provided by a one-piece mechanical rigid connection 40 that rigidly connects the second reflection element 24b of the first optical path length regulator system 20 with the fifth optical reflection element 26b of the second optical path length regulator system 21. The one-piece mechanical rigid connection 40, which can for example be a rigid metal bar joining the movable reflection elements 24b and 26b, coupled the reflection elements 24b and 26b rigidly to each other such that if the second reflection element 24b moves left or right by a displacement distance D, thereby correspondingly decreasing or increasing the first optical path length, the fifth reflection element 26b (co)moves left or right, by the same distance displacement D, respectively, thereby correspondingly increasing or decreasing the second optical path length.

Also indicated in Fig. 6 is a common motor device 50 that drives the one-piece mechanical rigid connection 40 and is hence configured for driving movements of the first and second optical path length regulator systems 20 and 21.

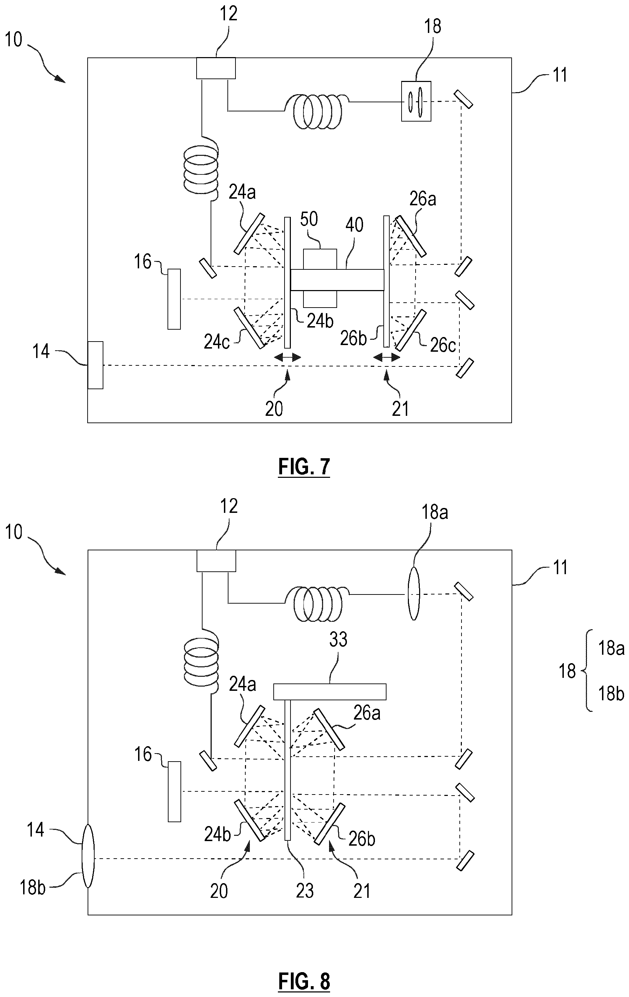

Fig. 7 shows a configuration of the measurement module 10 shown in Fig. 5, in which the first and second optical path length regulator systems 20 and 21 have been operated to decrease the second optical path length and to correspondingly increase the first optical path length. Thereby, the first and second optical path length regulator systems 20 and 21 are operated coupled with each other by the one-piece mechanical rigid connection 40. Thus, as compared to Fig. 5, in Fig. 7, the second reflection element 24b and the fifth reflection element 26b have moved right, driven by the common motor device 50.

In the exemplary embodiments shown in Figs. 5 and 7, the common motor device 50 that is connected to the first optical path length regulator system 20 and to the optical path length regulator system 21 is configured as a linear motor 22 configured for driving the one-piece mechanical rigid connection 40 to adjust the first optical path length and the second optical path length.

As schematically shown in Fig. 6, the linear motor 22 comprises a static permanent magnet 23 and a movable coil 25 that is electromagnetically coupled with the magnet 23, such that when an electric current is made to flow through the coil 25, the Lorentz force causes a displacement of the movable coil 25 and/or of a carrier on which the movable coil can be coiled (not shown in Fig. 6). Such linear drive is transmitted to the mechanical rigid connection 40, for example if the movable coil 25 and/or of a carrier on which the movable coil can be coiled is mechanically attached to the mechanical rigid connection 40, to drive the first and second optical path length regulator systems 20 and 21, in particular, with reference to the embodiments described above for Figs. 5 and 7, to drive a movement of the second reflection element 24b and of the fifth reflection element 26b.

In the exemplary configuration shown in Fig. 6, the coil 25 is arranged interiorly with respect to the magnet 23, which is ring-shaped and ecloses the coil 25, wherein an axis of the coil 25 around which the windings thereof are coiled is parallel to the direction of movement of the mechanical connection 40. However, in other related embodiments, the coil 25 can be coiled around the magnet 23, which needs not be ring-shaped and can for example be bar-shaped. In any case, an amplitude and direction of displacement of the mechanical connection 40 can be governed by controlling an electric current flowing through the coil 25 for a given polarity of the magnet 23.

In the exemplary configurations shown in Figs. 5 and 7, the measurement module 10 further comprises a focusing system 18 for collimating and focusing the laser light transmitted through the second optical path P2. In the configuration of Figs. 5 and 7, the focusing system 18 has a fixed focal length and is arranged in the second optical path P2 between the connection port 12 and the second optical path length regulator system 21.

In the embodiments shown in Figures 1 to 7, the measurement module 10 comprises a housing 11, in which the remaining components of the measurement module 10 are contained and in which the first and second optical paths are formed. The connection port 12 and the coupling port are formed through the housing 11, which is preferably fluid-tight and/or dust-tight, in particular according to IP64. In the embodiment of Figs. 5 and 7, the focusing system 18 is entirely arranged within the housing.

Fig. 8 shows a schematic view of a measurement module 10 according to related embodiments of the invention, in which the focusing system 18 is partly arranged within the housing 11, with a collimating lens 18a being arranged within the housing 11, in the second optical path P2 between the connection port 12 and the second optical path length regulator system 21. Further, the coupling port 14 is formed as a collimating lens 18b configured for collimating a laser beam entering into the measurement module 10 through the coupling port 14, i.e. transmitting from left to right in Fig. 8.

The exemplary embodiment shown in Fig. 8 also differs from the embodiment of Figures 1 to 3 and 5 to 7 in that the second reflection element 24b of the first optical path length regulator system 20 and the fifth optical reflection element 26b of the second optical path length regulator system 21 are replaced by a common reflection element 23, which has reflective surfaces on both sides thereof (left and right in Fig. 8), with the left-side reflective surface being integrated in the first optical path length regulator system 20 and the right-side reflective surface being integrated in the second optical path length regulator system 21. The common reflection element 23 is movable left and right, controlled by an electromechanical control unit 33 that is coupled to it. If the common reflection element 23 moves to the left, the first optical path length decreases and the second optical path length simultaneously increases. If the common reflection element 23 moves to the right, the first optical path length increases and the second optical path length simultaneously decreases.

In some embodiments, the first and second optical path length regulator systems 20 and 21 may be configured for having the same conversion relation, for example by correspondingly setting the angles of the fixed reflection elements 24a, 24b, 26a and 26b with respect to the common reflection element 23 to be symmetric (the common reflection element 23 acting as symmetry axis), such that for a given movement of the common reflection element 23, the first optical path length variation and the second optical path length variation have equal absolute values. However, in other embodiments, the first and second optical path length regulator systems 20 and 21 may be configured for having different conversion relation, for example by setting the fixed reflection elements 24a, 24b, 26a and 26b with respect to the common reflection element 23 to be non-symmetric (the common reflection element 23 no longer acting as symmetry axis), such that for a given movement of the common reflection element 23, the first optical path length variation and the second optical path length variation have different absolute values, possibly absolute values differing by a factor, which can be 2 or more, 3 or more, 4 or more, 5 or more, 10 or more, 15 or more or 20 or more.

In all exemplary embodiments of the measurement module 10 of the invention described with respect to Figures 1 to 8, laser light is transmitted through the first optical path length regulator system 20 and through the second optical path length regulator system 21 being reflected and without being refracted other than by air separating the different optical elements. In particular, such laser light is not transmitted through transmissive optical elements such as lenses, prisms or optical fibers having a refraction index different from a refraction index of air. As a consequence, a first refraction index of a section of the first optical path P1 within the first optical path length regulator system 20 and a second refraction index of a section of the second optical path P2 within the second optical path length regulator system 21 equals to a refraction index of air.

Further, in all exemplary embodiments of the measurement module 10 of the invention described with respect to Figures 1 to 8, the measurement module 10 comprises no dynamic scanning unit therein.

The use of different configurations of reflection elements for the first and/or second optical path length regulator system 20 and 21 as previously discussed with respect to the embodiments illustrated in Figs. 1 to 8 is not mutually exclusive and the skilled person shall understand that the different configurations disclosed herein can be combined at will in a measurement module according to the present invention. This means, in particular, that the different configurations described for each of the first and second optical path length regulator systems 20 and 21 discussed above with respect to the exemplary embodiments illustrated in Figs. 1 to 8 can be combined with each other.

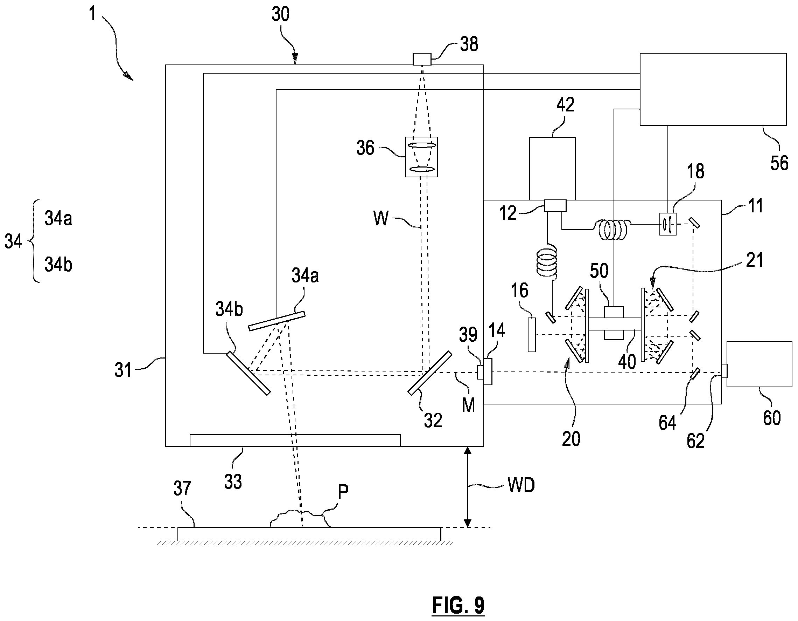

Fig. 9 shows a schematic view of a laser processing apparatus 1 according to an embodiment of the invention that includes a laser processing module 30, a measurement module 10 and a distance detection device 42. The laser processing module 30 is configured for laser processing a workpiece P that is arranged on a work field 37 associated with the laser processing module 30. The work field 37 may be defined on a movable stage configured for holding the workpiece P and/or layers of work material for forming the workpiece P, possibly at different configurable heights with respect to the laser processing module 30.

The workpiece may for example be an object being additively manufactured by the laser processing module 30 or an electronic device or device part, such as a battery or battery part, in which the laser processing module 30 may be implementing a laser welding process.

The laser processing module 30 is configured for laser-processing the workpiece P on the work field 37 by scanning a work beam W of laser light over the work field 37 to thermally interact with a work material of which the workpiece P is made. The work beam W is inputted into the laser processing module 30 through an input 38. In other related embodiments, the input 38 may include or may be replaced by a laser light source for generating the work beam W.

The laser processing module 30 comprises an optical element 32, for example a dichroic mirror, that is reflective for the work beam W and is configured for reflecting the work beam W towards a deflection unit 34, which is configured for scanning the work beam W over the work field 37 through a laser-transparent window 33 that is formed in a housing 31 of the laser processing module 30. The deflection unit 34 comprises a pair of XY- movable mirrors 34a and 34b. The housing 31 encloses the remaining components of the laser processing module 30.

The measurement module 10 of the apparatus 1 can correspond to a measurement module 10 according to any of the embodiments of the present invention, in particular according to any of the exemplary embodiments discussed above with respect to Figs. 1-8. In the specific exemplary embodiment shown in Fig. 9, the measurement module 10 corresponds to the measurement module 10 of Figs. 5 to 7 but this should be understood as a non-limiting example.

The measurement module 10 is optically coupled to the laser processing module 30 via the coupling port 14 and via a corresponding coupling port 39 of the laser processing module 30 that is formed through the housing 31 of the laser processing module 30. The housing 31 can be fluid-tight and/or dust-tight, in particular according to IP64.

The measurement module 10 is mechanically coupled to the laser processing module 30 through a mechanical coupling between the housing 11 of the measurement module 10 and the housing 31 of the laser processing module 30, such that the measurement module 10 is arranged adjacent to the laser processing module 30.

As seen in Fig. 9, a laser light beam propagating through the second optical path P2 of the measurement module 10 is optically coupled through the coupling port 14 and through the coupling port 39 into the laser processing module 30 in the form of a measurement beam M, which is transmitted through the optical element 32 towards the deflection unit 34 of the laser processing module 30. The deflection unit can hence scan over the work field 37 both the work beam W and the measurement beam M. The dichroic mirror 32 is transmissive for the measurement beam M.

According to some examples, the work beam can be formed by laser light with a wavelength from 1000 nm to 1100 nm whereas the measurement beam can be formed by laser light with a wavelength from 810 nm to 850 nm. In the embodiment shown in Fig. 9, the dichroic mirror is reflective for wavelengths from 1030 nm to 1090 and transmissive for wavelengths from 400 nm to 950 nm.

The distance detection device 42 is optically coupled to the coupling port 12 of the measurement module 10. In the exemplary embodiment shown, the distance detection device 42 includes a laser source light for generating coherent laser light for generating the laser beams that propagate along the first optical path P1 and the second optical path P2 of the measurement module 10. Further, the distance detection device 42 comprises an interference sensor configured for performing distance detection measurements based on an interference of the laser light propagating through the first optical path P1 of the measurement module 10 with laser light propagating through the second optical path P2 of the measurement module 10 (corresponding to the measurement beam M).

Thus, the distance detection device 42 and the measurement module 10 implement, in combination, an interferometer system, wherein the first optical path P1 forms the reference arm of the interferometer system and the second optical path P2 forms the object arm of the interferometer system. Due to the configuration of the measurement module 10, both the reference arm and the object arm (or measurement arm) of this interferometer system have a respective variable optical path length, which is adjustable by the first optical path length regulator system 20 and the second optical path length regulator system 21 of the measurement module 10, respectively. Further, as previously stated, the first optical path length P1 can be additionally adjustable by tilting and/or shifting the reference optical reflector 16 in some embodiments.

The laser light transmitted through the coupling port 14 between the measurement module 10 and the laser processing module 30 forms the measurement beam M that that is used in the laser processing apparatus 1, in particular by the distance detection device 42, to perform distance measurements.

The measurement beam M, after reaching the workpiece P and/or the work field 37, is reflected back past the deflection unit 34 and past the optical element 32 into the measurement module 10, wherein it propagates again (backwards) along the second optical path P2 into the distance detection device 42. Based on an interferometric comparison between the measurement beam M received through the second optical path P2 and a corresponding beam of laser light propagating along the first optical path P1, the distance detection device 42 can perform distance measurements, for example to determine variations in a distance between the workpiece P and/or the work field 37 and the laser processing module 30. Additionally or alternatively, the distance detection device 42 can be configured to determine absolute values of such distances.

The distance detection device 42 can be configured to perform distance measurements, for example to determine a distance between the workpiece P and/or the work field 37 and the laser processing module 30 and/or variations in such distance. The distance detection device 42 can also perform distance measurements to detect an absolute value of the work distance WD or variations in the work distance WD.

The laser processing module 30 of Fig. 9 is configured as a so-called 3-axes scanner and comprises an optional focusing system 36 arranged between the input 38 and the optical element 32 that is configured for focusing the work beam W on the work field 37 and/or on the workpiece P. The focusing system 36 is comprised within the housing 31 of the laser processing module 30. The focusing system 36 can in particular correspond to a focusing unit (cf. "Fokussierungsvorrichtung") as disclosed in WO 2018/078137 A1.

Notably, the measurement module 10 includes the optional focusing system 18, which can be configured for (in combination with the second optical path length regulator system 21) focusing the measurement beam M on the work field 37 and/or on the workpiece P, in particular such that a position of the focus of the measurement beam M corresponds to a position of the focus of the work beam W. Thus, the work beam W and the measurement beam M can be focused by respective dedicated focusing systems 36 and 18, respectively. This allows adjusting the focusing settings of the focusing system 36 for the work beam W without affecting the focusing settings for the measurement beam M. Further, the focusing system 36 needs not be adapted to the distance detection device 42 and vice versa.

The measurement beam M, and laser light transmitted through the second optical path P2 of the measurement module 10 in general, is only deflected by deflection unit 34, but no additional deflection unit is comprised in the measurement module 10 within the housing 11. In particular, a section of the second optical path P2 between the focusing system 18 and the second optical path length regulator system 21 is free of any dynamic scanning unit and, in general, the entire second optical path P2 between the connection port 12 and the coupling port 14 is free of any optical deflection unit. The measurement beam M is hence controllably deflected once it reaches the deflection unit 34 of the laser processing module 30, as seen in Fig. 9.

In the embodiment shown in Fig. 9, the laser processing apparatus 1 further includes an optional control unit 56 that can be operatively connected with the deflection unit 34, in particular with each of the mirrors 34a and 34b, with the focusing unit 36, with the distance detection device 42, with the focusing system 18, and in this case with the common motor device 50 and in other related cases with any control unit(s) and/or motor unit(s) controlling operation of the first and second optical path length regulator systems 20 and 21. The control unit 56 can for example be or comprise an SP-ICE control card.

The control unit 56 can be configured to control the first and/or second optical path length regulator systems 20 and/or 21, and/or optionally also a movement and/or tilt of the reference optical reflector 16, possibly based on a distance and/or a distance variation determined by the distance detection device, for example as a function of the work distance WD and/or of a deflection angle of the deflection unit 34.

As shown in Fig. 9, the measurement module 10 may include an optional dichroic element 64 configured for extracting a part of laser light (a wavelength subrange thereof) propagating along the second optical path P2 via a monitoring port 62 formed in the housing 11 of the measurement module 10. An optical monitoring device 60 can then be connected to the monitoring port 62 and used to obtain information about a laser process being carried out with the laser processing module 30 using the light extracted through the monitoring port 62. The optical monitoring device 60 can generate a monitoring laser beam that copropagates with the measurement beam M along a portion of the measurement beam path, to the work field 37 and back, to monitor a laser processing performed by the work beam W of the laser processing module 30. The monitoring laser beam can have a wavelength different to a wavelength of the measurement beam M and/or of the work beam W, for example a wavelength of 633 nm. The optical monitoring device 60 can be or comprise a camera. The monitoring laser beam corresponds to said part of the laser light beam propagating along the second optical path P2 that is extracted by the dichroic element 64. The dichroic element 64 is configured for reflecting the measurement beam M coming from the coupling port 14 towards the second optical path length regulator system 21 and for transmitting the monitoring laser beam, coming from the coupling port 14 towards the monitoring port 62. In other related embodiments, rather than being arranged as indicated in Fig. 9, the dichroic element 64 can be arranged in an alternative position along the second optical path, for example between the connection port 12 and the focusing system 18 ,to extract light of the measurement beam between the focusing system 18 and the connection port 12. In similar embodiments, the dichroic element 64 can be arranged between the focusing system 18 and the second optical path length regulator system 21 to extract light of the monitoring beam there. These configurations have the advantage that the extracted light can remain within a detection range of the optical monitoring device 60 and focused irrespectively of possible variations of the optical path length of the measurement beam M, since such variations can be compensated by the second optical path length regulator system 21.

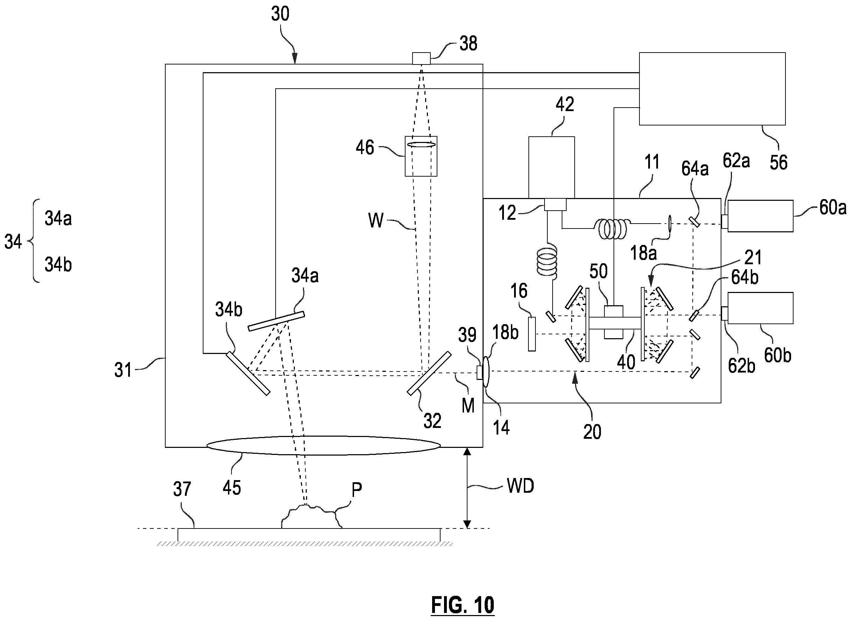

Fig. 10 shows a schematic view of a laser processing apparatus 1 according to an embodiment of the invention that includes a laser processing module 30, a measurement module 10 and a distance detection device 42. This embodiment corresponds to a variation of the embodiment of Fig. 9 and has identical or corresponding components unless indicated otherwise, as hinted by the use of the same reference numerals. In this case, the laser processing module 30 of Fig. 10 is configured as a so-called 2-axes scanner and comprises, instead of the laser-transparent window 33, an f-theta lens 45 formed through the housing 31, and, instead of the focusing system 36, a focus shifting system 46 arranged between the input 38 and the optical element 32 that is configured for dynamically shifting a focus of the work beam such that the f-theta lens 45 focuses the work beam W on the work field 37 and/or on the workpiece P.

In the embodiment of Fig. 10, the measurement module comprises, instead of the focusing system 18, a collimating lens 18a. The measurement beam M is collimated by the collimating lens 18a and focused by the f-theta lens 45. Further, the measurement module 10 of Fig. 10 comprises, acting as the coupling port 14, a further collimation lens 18b configured for collimating the measurement beam M when the measurement beam M re-enters the measurement module 10 after being reflected back at the work field 37 or the workpiece P.

A further difference between the exemplary embodiment shown in Fig. 10 and the exemplary embodiment shown in Fig. 9 is that, in the exemplary embodiment of Fig. 10, two different optional dichroic elements 64a and 64b configured for extracting a part of laser light (a wavelength subrange thereof) propagating along the second optical path P2 at different positions along the second optical path via corresponding monitoring ports 62a and 62b are formed in the housing 11 of the measurement module 10. A first wavelength range filtered by the first dichroic element 64a to the first monitoring port 62a can be different from a second wavelength range filtered by the second dichroic element 64b to the second monitoring port 62b. Corresponding optical monitoring devices 60a and 60b are respectively connected to each of the monitoring ports 62a and 62b.

In the exemplary embodiment of Fig. 10, the presence of the collimation lens 18b guarantees a better signal-to-noise ratio in the measurements performed by the distance detection device 42 as well as by the optical monitoring devices 60a and 60b.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

## Claims

1. A measurement module (10) for a laser processing apparatus (1) comprising:

a connection port (12) for optically coupling the measurement module (10) to a distance detection device (42) and a coupling port (14) for optically coupling the measurement module (10) to a laser processing module (30) of the laser processing apparatus (1);

a first optical path (P1) and a second optical path (P2) for laser light received and outputted through the connection port (12), wherein the first optical path (P1) is defined from the connection port (12) to a reference optical reflector (16) of the measurement module (10), wherein the reference optical reflector (16) reflects said laser light back to the connection port (12), and wherein the second optical path (P2) is defined from the connection port (12) to the coupling port (14) and back to the connection port (12);

wherein the measurement module (10) further comprises a first optical path length regulator system (20) for adjusting a first optical path length of the first optical path (P1) and a second optical path length regulator system (21) for adjusting a second optical path length of the second optical path (P2);

wherein the first optical path length regulator system (20) is coupled with the second optical path length regulator system (21), such that a first optical path length variation ($\Delta$1) of the first optical path length is coupled with a second optical path length variation ($\Delta$2) of the second optical path length.

2. The measurement module (10) of claim 1, wherein the first optical path length regulator system (20) comprises or is controlled by a first electromechanical control unit (30) and the second optical path length regulator system (21) comprises or is controlled by a second electromechanical control unit (31), wherein the first electromechanical control unit (30) and the second electromechanical control unit (31) are coordinated, such that the first optical path length variation of the first optical path length is electronically coupled with the second optical path length variation of the second optical path length, wherein each of the first optical path length regulator system (20) and the second optical path length regulator system (21) is preferably driven by a corresponding motor device.

3. The measurement module of claim 1, wherein the first optical path length regulator system (20) and the second optical path length regulator system (21) are mechanically coupled to each other, such that the first optical path length variation ($\Delta$1) of the first optical path length is mechanically coupled with the second optical path length variation ($\Delta$2) of the second optical path length, wherein the first optical path length regulator system (20) and the second optical path length regulator system (21) are preferably driven by a common motor device (50, wherein a mechanical coupling between the first optical path length regulator system (20) and the second optical path length regulator system (21) preferably comprises a mechanical rigid connection (40), preferably a one-piece mechanical rigid connection (40).

4. The measurement module of any of the preceding claims, wherein the first optical path length regulator system (20) is coupled with the second optical path length regulator system (21), such that the first optical path length variation ($\Delta$1) and the second optical path length variation ($\Delta$2) are equal in absolute value and opposite in sign; or such that an absolute value of the first optical path length variation ($\Delta$1) and an absolute value of the second optical path length variation ($\Delta$2) differ by a factor, the factor preferably being at least 2, 3, 4, 5, 10, 15 or 20.

5. The measurement module of any of the preceding claims, wherein a first refraction index of a section of the first optical path (P1) within the first optical path length regulator system (20) and/or a second refraction index of a section of the second optical path (P2) within the second optical path length regulator system (21) equals to a refraction index of air.

6. The measurement module of any of the preceding claims, wherein the coupling port (14) is configured for collimating a laser beam transmitted therethrough to the interior of the measurement module.

7. The measurement module of any of the preceding claims,

wherein the first optical path length regulator system (20) comprises a first group (24) of tilted reflection elements (24a, 24b) for multiply reflecting the laser light along the first optical path (P1) at reflecting surfaces thereof, wherein the reflective surfaces of the reflection elements of the first group (24) face each other and are angled with respect to each other at least pairwise, such that a beam of said laser light incident upon the first group (24) is reflected several times between the reflective surfaces thereof, wherein an extension of the first optical path (P1) between the tilted reflection elements (24a, 24b) of the first group (24) is adjustable by setting a relative position between said reflection elements (24a, 24b) of the first group (24); wherein the first optical path length regulator system (20) is configured for implementing said first optical path length variation ($\Delta$1) by setting the relative position between said reflection elements (24a, 24b) of the first group (24); and

wherein the second optical path length regulator system (21) comprises a second group (26) of tilted reflection elements (26a, 26b) for multiply reflecting the laser light along the second optical path (P2) at reflecting surfaces thereof, wherein the reflective surfaces of the reflection elements of the second group (26) face each other and are

23

angled with respect to each other at least pairwise, such that a beam of said laser light incident upon the second group (26) is reflected several times between the reflective surfaces thereof, wherein an extension of the second optical path (P2) between the tilted reflection elements (26a, 26b) of the second group (26) is adjustable by setting a relative position between said reflection elements (26a, 26b) of the second group (26); wherein the second optical path length regulator system (21) is configured for implementing said second optical path length variation ($\Delta$2) by setting the relative position between said reflection elements (26a, 26b) of the second group (26), wherein the tilted reflection elements of the first and/or second group is preferably configured such that said beam of said laser light is reflected at least 2, 3, 4, 5, 6, 8 or 10 times at the reflective surface of each of the tilted reflection elements of the first and/or second group.

8. The measurement module of claim 7, wherein the first group (24) of tilted reflection elements (24a, 24b) comprises a first reflection element (24a), a second reflection element (24b) and a third reflection element (24c) for multiply reflecting the laser light along the first optical path (P1) at reflecting surfaces thereof,

wherein the reflective surfaces of the first and second reflection elements (24a, 24b) face each other and are angled with respect to each other, such that a beam of said laser light incident upon the first group (24) is reflected several times between the reflective surfaces thereof, and wherein the reflective surfaces of the third and second reflection elements (24b, 24c) face each other and are angled with respect to each other, such that said beam of said laser light incident upon the first group (24) is reflected several times between the reflective surfaces thereof, wherein an extension of the first optical path (P1) between the tilted reflection elements (24a, 24b, 24c) of the first group (24) is adjustable by setting a relative position between the first and second reflection elements (24a, 24b) and/or between the second and third reflection elements (24b, 24c); wherein the first optical path length regulator system (20) is configured for implementing said first optical path length variation ($\Delta$1) by setting said relative position between the first and second reflection elements (24a, 24b) and/or between the second and third reflection elements (24b, 24c), wherein a first angle ($\alpha$1) between the first and second reflection elements (24a, 24b) is preferably equal and opposed to a second angle ($\alpha$2) between the second and third reflection elements (24b, 24c); and/or wherein the first angle ($\alpha$1) and/or the second angle (a2) preferably is from 5° to 20°, more preferably from 10° to 15°.

9. The measurement module of claim 8, wherein said extension of the first optical path (P1) between the tilted reflection elements (24a, 24b, 24c) of the first group (24), in particular between the first reflection element (24a) and the second reflection element (24b) and between the second reflection element (24b) and the third reflection element (24c), is adjustable by moving the second reflection element (24b) with respect to the first and third reflection elements (24a, 24c), preferably linearly, such that a first angle ($\alpha$1) between the first and second reflection elements (24a, 24b) and a second angle ($\alpha$2) between the second and third reflection elements (24b, 24c) preferably remains constant, wherein the first and third reflection elements (24a, 24c) are preferably fixed.

10. The measurement module of any of claims 7 to 9, wherein

the second group (26) of tilted first reflection elements (26a, 26b) comprises a fourth reflection element (26a), a fifth reflection element (26b) and a sixth reflection element (26c) for multiply reflecting the laser light along the second optical path (P2) at reflecting surfaces thereof, wherein the reflective surfaces of the fourth and fifth reflection elements (26a, 26b) face each other and are angled with respect to each other, such that a beam of said laser light incident upon the second group (26) is reflected several times between the reflective surfaces thereof, and wherein the reflective surfaces of the fifth and sixth reflection elements (26b, 26c) face each other and are angled with respect to each other, such that said beam of said laser light incident upon the second group (26) is reflected several times between the reflective surfaces thereof, wherein an extension of the second optical path (P2) between the tilted reflection elements (26a, 26b, 26c) of the second group (26) is adjustable by setting a relative position between the fourth and fifth reflection elements (26a, 26b) and/or between the fifth and sixth reflection elements (26b, 26c); wherein the second optical path length regulator system (21) is configured for implementing said second variation of the second optical path length of the second optical path (P2) by setting said relative position between the fourth and fifth reflection elements (26a, 26b) and/or between the fifth and sixth reflection elements (26b, 26c), wherein a third angle between the fourth and fifth reflection elements (26a, 26b) preferably is equal and opposed to a fourth angle between the fifth and sixth reflection elements (26b, 26c); and/or wherein the third angle and/or the fourth angle is from 5° to 10°, preferably from 10° to 150.

11. The measurement module of claim 10, wherein said extension of the second optical path (P2) between the tilted reflection elements (26a, 26b, 26c) of the second group (26), in particular between the fourth reflection element (26a) and the fifth reflection element (26b) and between the fifth reflection element (26b) and the sixth reflection element (26c), is adjustable by moving the fifth reflection element (26b) with respect to the fourth and sixth reflection elements (26a, 26c), preferably linearly, such that a third angle between the fourth and fifth reflection elements (26a, 26b) and a fourth angle between the fifth and sixth reflection elements (26b, 26c) remains constant, wherein the fourth and sixth reflection elements (26a, 26c) are more preferably fixed.

12. The measurement module of any of the preceding claims 7 to 11, wherein the first group (24) and/or the second group (26) comprises one or more pairs (28a, 28b) of tilted reflection elements, each pair of reflection elements comprising two reflection elements symmetrically arranged with respect to an axis of symmetry arranged between both reflection elements, wherein the two tilted reflection elements of each pair (28a, 28b) of tilted reflection elements are preferably configured for reflecting a beam of laser light incident upon the pair 2, 4, 6, 8, 10 or more times at a reflective surface of each of said reflection elements; and/or

wherein each of the one or more pairs (28a, 28b) of tilted reflection elements of the first group (24) and/or the second group (26) preferably comprises a movable reflection element (28a-1, 28b-1), and optionally a fixed reflection element (28a-2, 28b-2), wherein the movable reflection elements (28a-1, 28b-1) of all of the one or more pairs are more preferably movable together for adjusting the first and/or second optical path length (P1, P2) respectively.

13. An interferometer system comprising a distance detection device (42), a coupling port (14), and a measurement module (10) according to any of the preceding claims; wherein the measurement module (10) defines the first optical path (P1) corresponding to a reference arm of the interferometer system and the second optical path (P2) corresponding to an object arm of the interferometer system;

wherein the coupling port (14) is configured for optically coupling the second optical path (P2) with a laser processing module; and

wherein the distance detection device (42) is configured for performing distance measurements based on an interference of laser light transmitted along the first optical path (P1) with laser light transmitted along the second optical path (P2).

14. A laser processing apparatus (1) comprising:

a laser processing module (30) for laser-processing a workpiece (P) on a work field (37) using a work beam (W); and

a measurement module (10) according to any of claims 1 to 12, wherein the measurement module (10) is optically coupled with the laser processing module (30) by the coupling port (14) thereof to receive and output laser light from and to the laser processing module (30) in the form of a measurement beam (M).

15. The laser processing apparatus (1) of claim 14, wherein the laser processing module (30) comprises:

an optical element (32) for reflecting one of the work beam (W) and the measurement beam (M) and for transmitting therethrough the other one of the work beam (W) and
the measurement beam (M); and

a deflection unit (34) for deflecting the work beam (W) and the measurement beam (M) to and from the workpiece (P) and/or the work field (37);

wherein a work beam path and a measurement beam path are defined in the laser processing module (30) for the work beam (W) and the measurement beam (M) respectively, wherein the work beam path is defined such that the work beam (W) is reflected/transmitted by the optical element (32) towards the deflection unit (34) and deflected by the deflection unit (34) to the workpiece (P) and/or the work field (37),

wherein the measurement beam (M) propagates in the measurement module (10) along the second optical path (P2) of the measurement module (10), wherein the measurement beam path is defined such that the measurement beam (M) propagates from the coupling port (14) of the measurement module (10) to the optical element (32) and to the deflection unit (34) and back to the coupling port (14), being transmitted/reflected by the optical element (32) to and from the deflection unit (34),

being deflected by the deflection unit (34) to and from the workpiece (P) and/or the work field (37), and being reflected back at the workpiece (P) and/or the work field (37).

**FIG. 1**

**FIG. 2**

**FIG. 3**

**FIG. 4**

**FIG. 5**

**FIG. 6**

**FIG. 7**

**FIG. 8**

FIG. 9

**FIG. 10**

Europäisches
Patentamt

European
Patent Office

Office européen
des brevets

# EUROPEAN SEARCH REPORT

**Application Number**

EP 24 20 8752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2020/001395 A1 (KOGEL-HOLLACHER MARKUS [DE] ET AL) 2 January 2020 (2020-01-02)<br>* abstract; figures 2-6 *<br>* paragraph [0054] - paragraph [0076] *<br>----- | 1-6, 13-15 | INV.<br>G01B9/02015<br>B23K26/03<br>B23K26/04<br>G01B11/02 |
| X | US 2018/164089 A1 (SCHÖNLEBER MARTIN [DE] ET AL) 14 June 2018 (2018-06-14)<br>* abstract; figures 1,5-11 *<br>* paragraph [0003] - paragraph [0005] *<br>* paragraph [0194] - paragraph [0235] *<br>----- | 1,3,5-7, 13 | |
| X | US 2018/031367 A1 (SMITH DANIEL GENE [US]) 1 February 2018 (2018-02-01)<br>* abstract; figures 7-9 *<br>* paragraph [0046] - paragraph [0050] *<br>----- | 1,3-13 | |

**TECHNICAL FIELDS SEARCHED (IPC)**

G01B
B23K

The present search report has been drawn up for all claims

| Place of search | Date of completion of the search | Examiner |
|---|---|---|
| Munich | 9 April 2025 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8752

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | Publication date |
|---|---|---|---|
| US 2020001395 A1 | 02-01-2020 | CA 2912135 A1<br>DE 102013008269 A1<br>US 2016059347 A1<br>US 2020001395 A1<br>WO 2014183849 A1 | 20-11-2014<br>20-11-2014<br>03-03-2016<br>02-01-2020<br>20-11-2014 |
| US 2018164089 A1 | 14-06-2018 | DE 102017128158 A1<br>US 2018164089 A1 | 14-06-2018<br>14-06-2018 |
| US 2018031367 A1 | 01-02-2018 | JP 6040992 B2<br>JP 2015505050 A<br>US 2014340691 A1<br>US 2018031367 A1<br>US 2021025697 A1<br>WO 2013093633 A2 | 07-12-2016<br>16-02-2015<br>20-11-2014<br>01-02-2018<br>28-01-2021<br>27-06-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160059347 A1
- DE 2019001858 B3
- US 20170276471 A1
- EP 4296612 A1
- WO 2018078137 A1